# EUROPEAN PATENT SPECIFICATION

(11) **EP 1 402 679 B1**
(45) Date of publication and mention of the grant of the patent: **30.03.2005**
(21) Application number: 02735376.2
(22) Date of filing: 22.05.2002
(51) Int. Cl.: H04L 9/08, H04L 29/06, H04L 12/18, H04N 7/088, H04N 7/16, H04N 7/173, H04N 7/167, H04N 5/00

(54) **SECURITY DEVICES AND PROCESSES FOR PROTECTING AND IDENTIFYING MESSAGES**
SICHERHEITSBEZOGENE VORRICHTUNGEN UND VERFAHREN ZUM SCHUTZ UND ZUR IDENTIFIKATION VON NACHRICHTEN
DISPOSITIFS ET PROCEDES DE SECURITE POUR LA PROTECTION ET L'IDENTIFICATION DE MESSAGES

(30) Priority: 23.05.2001 FR 0106769
(43) Date of publication of application: 31.03.2004
(73) Proprietor: Thomson Licensing S.A., 92100 Boulogne-Billancourt (FR)
(72) Inventor: LESENNE, Laurent, F-35690 ACIGNE (FR); PASQUIER, Frédéric, F-35890 Laillé (FR); SCHAEFER, Ralf, 35690 Acigné (FR)
(74) Representative: Kerber, Thierry
(86) International application number: PCT/EP2002/005610
(87) International publication number: WO 2002/096016

(56) References cited:
- WO-A-00/79734
- WO-A-98/43431
- US-A- 5 222 137
- US-A- 5 301 233
- BISHOP M: "A security analysis of the NTP protocol version 2" COMPUTER SECURITY APPLICATIONS CONFERENCE, 1990., PROCEEDINGS OF THE SIXTH ANNUAL TUCSON, AZ, USA 3-7 DEC. 1990, LOS ALAMITOS, CA, USA,IEEE COMPUT. SOC, US, 3 December 1990 (1990-12-03), pages 20-29, XP010021620 ISBN: 0-8186-2105-2
- "ADVANCED TELEVISION ENHANCEMENT FORUM SPECIFICATION (ATVEF)" ADVANCED TELEVISION ENHANCEMENT FORUM SPECIFICATION (ATVEF), XX, XX, February 1999 (1999-02), pages 1-37, XP002939077
- ZIMMERMANN P ET AL: "PGP Message Exchange Formats" IETF REQUEST FOR COMMENTS, August 1996 (1996-08), pages 1-21, XP002206142
- SEDLMEYER: "MULTIMEDIA HOME PLATFORM - STANDARD 1.0.1" FERNSEH UND KINOTECHNIK, VDE VERLAG GMBH. BERLIN, DE, vol. 55, no. 10, October 2001 (2001-10), pages 593-597,600-603, XP001101096 ISSN: 0015-0142
- HANDLEY M ET AL.: "Session Announcement Protocol (RFC 2974)" REQUEST FOR COMMENTS, [Online] October 2000 (2000-10), pages 1-18, XP002187917 Retrieved from the Internet: <URL:ftp://ftp.isi.edu/in-notes/rfc2974.tx t> [retrieved on 2002-01-21]

## Description

The present invention pertains to the secure protection and identification of messages on a network, as well as to corresponding devices.

In order to secure the flow of messages on an unsecure network, whether this flow be achieved in particular by radio broadcasting, by cable or by internet network, it is conventional to use enciphering keys, also referred to as encryption keys. In general, the sender of the messages is furnished with such an enciphering key and the receiver, with a corresponding identification key. The keys may be private or public, depending on the applications envisaged. For example, a sender uses a key pair, of which he broadcasts a public enciphering key making it possible to encipher messages and keeps for himself just a private deciphering key.

Enciphering of messages has two main types of applications:
- message authentication, for which the results of the enciphering are incorporated into the messages in the form of a signature; the identification key can then be either a deciphering key or an enciphering key;
- message encryption, for which the results of the enciphering replace portions of the enciphered message; the identification key is then a deciphering key.

In both these types of applications, it is advisable to minimize the risks of interception and of fraudulent deciphering of the messages by a third party, or of falsification by the fraudulent affixing of a signature. Several systems have therefore been proposed in order to complicate the possibilities of unauthorized enciphering or deciphering.

Thus, techniques have been developed for enabling the regular modification of the corresponding enciphering and identification keys. Some of these techniques rely on the despatching of new identification keys across the communication network, while making it difficult to recognize these keys (for example by encrypting the keys), in particular when the latter are private keys. However, these techniques are vulnerable to interception of the keys despatched and to their use, despite the precautions taken. Moreover, with each despatch of a new key, they require the recognition and the installation of the latter by the receiver, this possibly being detrimental to the efficiency of the latter.

Document EP-0,506,637 describes a system for the validation and verification of mobile stations of a cellular radio communications network. The system includes a fixed key and a modifiable key which is referred to as a rolling key, both in the network and in the mobile stations. These keys are applied as inputs to an authentication algorithm and a comparison of the responses generated by the network and in each mobile station makes it possible to pinpoint frauds. The rolling key is updated simultaneously in the network and the mobile station upon each bilateral authentication, as a function of historical authentication information common to both.

The security of exchanges can thus be enhanced, since the keys are regularly modified without travelling through the network. However, a drawback of such a system is that it requires a calculation of a new rolling key upon each bilateral authentication. Moreover, problems of asynchronism might arise in the presence of a technical malfunction and might thus render the authentication unusable. To remedy this, specific mechanisms have to be built in, thereby complicating the systems and running the risk of reducing the reliability of the authentication.

Patent US-6,105,133 discloses a bilateral system for the authentication and encryption of sending/receiving stations. The exchanges between any two of the stations are securely protected by authentication and encryption, and by the use of an enciphering key modified upon each connection between these stations. This key is calculated independently in each of the stations, on the basis of the identifier of the other station, of parameters recorded in a fixed manner in both stations and of a change value communicated from one station to the other.

This technique enhances the reliability of the system by allowing frequent modification of the enciphering key, avoiding the transfer of this key over the network and ensuring synchronization of the key updates in the sending and receiving stations. At each update however, it requires the calculation of a new key in the sender and in the receiver. The times required for these calculations could jeopardize the operations to be performed rapidly after the reception of the messages. In particular, these times are the cause of malfunctioning when the messages to be decrypted and/or authenticated are followed by other messages whose processing requires a knowledge of the earlier messages, and when the time span between the earlier messages and the later messages is insufficient to acquire this knowledge.

Patent US-5,301,233 discloses a process for the transmission and reception of personalized programs. Each program consists of encrypted elements and contains for each of its elements, an identifier of the intended receiver. Only the latter is authorized to access the corresponding elements. An access control message allows the receiver to reconstruct a control word used for the encryption of the elements intended therefor. This message contains in particular a "service key identifier" and optional a signature obtained using the identified service key. This possible signature, applied to the control word, makes it possible. to be sure of the validity of this word and to ignore the program received should the response be negative. The key identification technique, not specified, relies on a batch of information for key generation, this batch being contained in the key identifier, the latter extending for example over three bytes for a signature on eight bytes (col.5,1.42-52).

Patent US-5,222,137 relates to the dynamic selection of encryption keys for encrypted radio transmissions. During operation, a radio having key identifiers and corresponding keys communicates with other identical radios. It transmits and receives encrypted signals comprising unencrypted key identifiers. Before each transmission, the sending radio automatically selects one of the key identifiers and uses the corresponding encryption key to encrypt the message to be transmitted. The receiving radios determine the encryption key used, by means of the key identifier received, and use it to decrypt the message. The level of security is thus enhanced, since this method makes it possible to ensure dynamic protection of the contents by enabling modification of the key used upon each despatch.

However, it requires sufficient operational volume and memory space to process each of the messages received. In cases where the information must be rapidly available and where the size of the messages may be substantial, in particular for the despatching of services to individual receivers, this situation might cause delays, or even the triggering of memory wiping mechanisms which may lead to losses of information.

Document WO-00179734 concerns a system and method for receiving over a network a broadcast from a broadcast source. There is notably disclosed an announcement containing a session description and optionally an authentication header, the session announcement being preferably provided with an authentication and integrity part.

No specific mechanism is specified for improving the enciphering and authentication reliability.

The article "A Security Analysis of the NTP Protocol Version 2" by Matt Bishop, Computer Security Applications Conference, 1990, Proceedings of the sixth annual Tucson, AZ, USA 3-7 Dec. 1990, IEEE Comput. Soc., US, 3 December 1990, pp. 20-29, ISBN: 0-8186-2105-2, relates to a process for providing accurate time service on the Internet through the Network Time Protocol (NTP), and discloses in particular suited security mechanisms. Notably, origin authentication and packet integrity mechanism is described. According to it, the synchronization messages that are sent in the network from a peer sender to a peer receiver may include indices that reference authentication keys and algorithms, when an authentication mode is chosen. Each peer is associated to a unique key or none. The peer sender is then intended to use either that given key in determined cases, or the key of the receiving peer in other determined cases, or otherwise a given default key if the active peer's key is not available.

That predetermined key change method is quite relevant for synchronization on the Internet, but lacks flexibility in other situations, notably for broadcasting messages.

The patent application WO98/43431 discloses a method for downloading data from various sources to an MPEG receiver / decoder, in which interactive applications can be downloaded and run thereon. The application code is arranged as modules for each application and the preliminary sending of a directory table enables to specify table identifiers of the modules. That directory table also comprises en encrypted signature, as well as a key identifier corresponding to a private key used by the involved sending source for encrypting the signature. As multiple public encryption keys are stored in the receiver / decoder, the applications can thus be created by different sources.

This disclosure is interesting for flexibly adapting receivers to multiple sources for authentication of the received messages. However, no mechanism is provided for improving the authentication reliability for each of those sources.

The present invention relates to a security device for protecting messages intended to be despatched over a network and relying on the use of a modifiable enciphering key, the security device making it possible to modify this key in a flexible way without having to make it travel via the network, to synchronize the updates of keys in the sender and the receiver of the messages, and to perform the changes of keys very rapidly, while also making it possible to avoid delays or detrimental memory space requirements.

Moreover, the device of the invention can be implemented in an economical manner, without calling upon sophisticated algorithms for updating keys.

The invention also relates to a device for identifying messages received via a network, making it possible to obtain the advantages mentioned above.

The invention also applies to a sender of messages comprising one or more security devices according to the invention, to a receiver of messages comprising one or more identification devices according to the invention and to a computer program product, a message and corresponding security and identification processes.

In what follows, the following designations are employed:
- "authenfication", a procedure relating to a guarantee of origin and of integrity of messages travelling through a network, relying on the use of digital signatures contained in the messages and produced by means of keys before sending the messages,
- "encryption", a procedure of substituting for a plain text, an unintelligible text which cannot be utilized as is,
- "decryption", a procedure for replacing an encrypted text with a plain text, obtained by returning the encrypted text to its initial form,
- "enciphering", a procedure for determining an encrypted text from a message or from a portion of a message, this encrypted text being used either as replacement for a plain text (encryption), or as a signature (authentication),
- "decipherment", a procedure for at least partial reconstruction of a plain text from an encrypted text, either for attesting the origin and the integrity of the message containing the text (authentication), or for replacing the encrypted text with the plain text (decryption),
- "securing", a procedure for enciphering a message or a part of a message, for authentication or encryption purposes,
- "identification", a procedure for using an encrypted text received in a message for identifying this message, either by its origin and its integrity (authentication), or by its content (decryption);

The invention applies generally to security processes using electronic signature/authentication and/or or using encryption/decryption. It relies on the use of enciphering keys on transmission and on enciphering keys and/or deciphering keys on reception, deciphering keys being implemented for decryption and deciphering keys and/or enciphering keys being implemented for authentication.

A favoured field of application of the invention is digital television, in particular for the broadcasting of audiovisual data, PSI (Program Specific Information), SI (Service Information), interactive data, signalling data or private data. Specifically, certain digital broadcasting networks and certain networks with return channels, in particular terrestrial and microwave frequency networks, are vulnerable to piracy, in particular to spoofing. Piracy may then consist in intercepting data, in modifying them and in broadcasting or injecting the modified data into the network. Especially useful applications relate to electronic commerce and home banking.

For this purpose, the subject of the invention is a security device for protecting messages intended to be despatched over a network, from a sender to at least one receiver comprising means for control of identification of messages by a modifiable current identification key. That security device comprises:
- a unit for control of enciphering of at least a part of each of the messages by means of a modifiable current enciphering key,
- a unit for changing the current enciphering key, designed for selecting this key from a predetermined set of available enciphering keys associated with that sender, this changing unit authorizing a change of key upon the despatching of any message, or of any message of a given type,
- and a unit for registering in the message a key identifier, enabling the receiver to select the current identification key from a predetermined set of available identification keys corresponding to this predetermined set of the available enciphering keys, this key identifier enabling the receiver to modify the current identification key in such a way that this current identification key corresponds to the current enciphering key.

The security device comprises means of control of addition to each of the messages, of a signature consisting of a result of the enciphering of this part of the message by means of the current enciphering key, and the messages are service announcement messages.

The expression "service announcement message" is understood to mean a message despatched upstream within the framework of a service, giving information and instructions relating to the subsequent despatching of one or more other messages of this service. These other messages are bearers of content ("content messages") or of immediate-triggering instructions ("triggers"). In advantageous forms of embodiment, the service announcement message comprises a header in the SAP format (standing for Session Announcement Protocol) and a payload in the SDP format (standing for Session Description Protocol),

The ATVEF specifications (that is to say according to the Advanced Television Enhancement Forum Standard) provide for the optional presence of an authentication field in the service announcement messages. This is also disclosed in document WO-00/79734.

As indicated above, the expression "identification" keys designates deciphering or enciphering keys which are associated respectively with enciphering keys used by the security device. For decryption, the set of identification keys is a set of deciphering keys, each deciphering key having the same length as the corresponding enciphering key used for the encryption.

For authentication, this set consists of deciphering keys, enciphering keys or a combination of both types of keys, generated respectively from the corresponding enciphering keys on transmission. Each identification key, and most especially enciphering key, used by the receiver then preferably has a length which is substantially less than the corresponding enciphering key used by the security device to generate the signature. Specifically, it is not necessary to decrypt or to reconstruct the signature completely: a partial coincidence is sufficient to ensure the authenticity of the message. The authentication operations are thus simplified and, for the identification keys consisting of enciphering keys. the risks of fraudulent production of signatures are reduced by not broadcasting the complete enciphering keys used on transmission to the receivers.

The despatching of a simple identifier is sufficient for obtaining precisely the desired identification key, in a quasi-instantaneous manner in the receiver. This result is achieved by virtue of a prior recording of two corresponding sets of available keys, respectively on transmission and on reception, and of the indexing of these keys. Unexpectedly, the protection of the information transmitted does not rely however on encryption of the content messages and the presence of one and the same set of keys in identical send/receive systems (radios), as in the prior document US-5,222,137. The security device of the invention actually implements an authentication process applied to service announcement messages, between sending and receiving devices which can be totally dissymmetric.

The device of the invention is all the more unexpected since the formats used in the world of interactive television, in particular for the ATVEF and MHP (Multimedia Home Platform) standards, do not support the possibility of integrating into the service announcement messages a key identifier making it possible to calculate the signature of the announcement message. Thus, in the example of ATVEF, the RFC (Request For Comment) document in progress regarding the Session Announcement Protocol, RFC 2974, stipulates that it is possible to sign the service announcement messages by calculating the signature on an announcement message devoid of any information relating to its authentication.

The MHP standard specifies for its part the manner in which applications and broadcasting data are to be authenticated and the manner in which data transferred onto a return channel are to be protected. However, it does not provide for any authentication of signalling messages, the latter fulfilling the function of service announcement messages.

The device of the invention therefore runs fundamentally counter to the received wisdom on the subject.

This solution makes it possible to avoid at receiver level, needless allowance for messages of an announced service, of the content message or trigger type, when this service is not valid. The receivers are thus made less bulky and superfluous consumption of operations and memory space is pared, without compromising on the reliability and the security of the system.

Moreover, the encryption of the content messages affords a further possibility, which may prove desirable in certain cases but which in most situations is not indispensable. Processing costs and memory space costs, not only in respect of unauthorized services (unauthenticated service announcement message) but also in respect of validated services, are then avoided in the absence of such encryption.

The device of the invention authorizes a change of key upon the despatching of any message, or of any message of a given type. In a first form of indication of keys, the key identifier is adjoined to any message which may form the subject of a key modification. The key corresponding to this indicator on reception is then systematically selected on the basis of the identifier, and used for identification. In a second form of indication of keys, the key identifier is supplemented with a key modification binary indicator. On reception, the current identification key is then held in memory until the key change indicator signals a change of key. In a third form of identification of keys, the key identifier is specified only in the case of an actual change of key. Otherwise, the key identifier is replaced by a default value (for example 0), signalling that the key previously used is still valid. This third economical form is beneficial in cases of sending messages to a collection of receivers which are always listening for messages and do not miss any. It is applicable in particular in multicasting over the Web.

The key identifier can be determined in various ways, both as regards the frequency of change and the key selection performed. Thus, in a first form of change, the key identifier is changed when requested by a user on transmission, who may thus determine both the occurrences of change and the new keys selected. In a second form of change, the key identifier is modified periodically, according to a period chosen by the user, and the new identifier is drawn randomly. In a third form of change, the identifier is modified according to a predetermined series of values, at instants which are chosen randomly but spaced apart by durations lying between a minimum duration and a maximum duration. In the second and the third forms of change, it is preferable for the user employing the system to be able to modify the current key in any way and at any moment.

The keys on transmission and on reception can be private or public. Preferably, the keys on transmission are private, so as to guarantee the identity of the sending party, the keys on reception advantageously being public. Additionally, in the case of supplementary security using encryption of subsequent content messages of the service, the keys on reception for this encryption are advantageously private, so as to guarantee the confidentiality of the messages.

Advantageously, the enciphering control unit calls upon an enciphering library in which the available enciphering keys are stored.

The predetermined set of available identification keys is advantageously a set of deciphering keys.

Moreover, preferably, the part of the message to be enciphered consists of the message in full minus signature, including the key identifier. Thus, authentication pertains not only to the identity of the sending party and the payload of the message, but more generally to all the information contained in the message, including to the choice of the identification key and to any operating parameters at receiver level.

In an advantageous form of embodiment, the security device of the invention is able to encrypt the messages, this functionality being applied preferably to the content messages following the authenticated service announcement messages. It is then beneficial for the encryption key to be identified according to a mode similar to that employed for the authentication of the service announcement messages. Preferably, each of the messages to be encrypted comprising a header and a payload, the enciphering control unit is designed to control:
- an enciphering of the part of the message to be encrypted by a current encryption key, this part comprising at least a portion of the payload,
- and a replacement in the message of this part by encrypted information consisting of a result of the enciphering of this part by means of the current encryption key.

In a variant of this form of embodiment, a two-level enciphering of the messages of the service to be encrypted, which follow the authenticated service announcement messages, is produced in the following way:
- encryption with a current encryption key selected from a first set of available keys,
- then signature with a current authentication key selected from a second set of available keys, the enciphering for authentication being preferably applied to the whole message minus signature, including the encrypted part.

According to a preferred form of application, the service announcement messages are chosen at least from among ATVEF announcement messages and/or system announcement messages.

Each ATVEF announcement message of a service is followed by at least one HTTP (according to the HyperText Transfer Protocol method) content message then by one or more service triggers. The system announcement messages of a service, generally private and multicast, are for their part followed by a binary file of the service. The latter announcement messages advantageously have a form similar to that of the ATVEF announcement messages. A detailed description pertaining to the use of service announcement messages other than ATVEF announcement messages will be found in the European patent application filed on 23 October 2000 under the filing number 00402921.1 and its PCT extension under the filing number EP/01/12333.

Each of the service announcement messages having an authentication field of variable length, the registering unit is preferably designed to register the key identifier in this authentication field. This embodiment is advantageous through its simplicity, since it allows very flexible utilization of a field already provided in the service announcement message, without having to add a specific field.

In a preferred form of application other than ATVEF and system announcement messages, the service announcement messages are chosen at least from among MHP signalling messages.

According to a first mode of recognition of keys, each of the key identifiers is associated with a determined one of the available enciphering keys and with a determined one of the available identification keys corresponding to this enciphering key.

The key to be used on reception is therefore given in a one-to-one manner by the key identifier selected. This embodiment allows rapid success in guaranteeing the origin and integrity of the message.

According to a second mode of recognition of keys, each of the key identifiers is associated with a determined block of enciphering keys from among the set of available enciphering keys and with a determined block of identification keys corresponding respectively to the enciphering keys, from among the set of available identification keys.

The key identifier selected does therefore not allow the receiver to know immediately the identification key to be used. It has to carry out successive tests with the various keys of the intended block, until the appropriate one is reached. This mode of embodiment therefore offers additional protection against piracy, at the cost of increased complexity and increased duration of authentication or decryption.

Advantageously, the registering unit is designed to choose the key identifier from among a number of values (possibly corresponding to keys or to blocks of keys) lying between 8 and 12, and preferably equal to 10. In other embodiments ensuring enhanced security, this number of values equals 256 (coding of the identifier on one byte) or even 65536 (coding on two bytes).

Additionally, the keys on transmission and on reception may preferably be updated. For example, the set of identification keys is designed to be modified remotely, by connection of the receivers to servers, identification of the receivers and secure recovery of a table of identification keys via the network.

The invention also applies to a sender of messages. According to the invention, the latter comprises at least one security device in accordance with any one of the modes of embodiment of the invention, this sender being preferably designed to send the messages by broadcasting.

The expression "broadcasting" designates the transmission of identical data to a collection of destinations, whether this be performed in particular by radio broadcasting, by cable or by Internet.

The invention also relates to a device for identifying messages received via a network, each of the messages including a part enciphered by means of a modifiable current enciphering key. This identification device comprises:
- a unit for control of identification of the enciphered part, by means of a modifiable current identification key,
- and a unit for extracting from this message a key identifier, enabling the current identification key to be selected from a predetermined set of available identification keys corresponding to a predetermined set of available enciphering keys in such a way that this current identification key corresponds to the current enciphering key,

The identification control unit is a unit for control of authentication of the enciphered part, this enciphered part being a current signature, and the messages are service announcement messages.

Moreover, the identifying device is compliant with claim 13 or claim 14.

This device for identifying messages is preferably capable of identifying the messages securely protected by means of any one of the modes of embodiment of a security device in accordance with the invention.

The invention also applies to a receiver of messages. According to the invention, this receiver comprises at least one identification device in accordance with any one of the modes of embodiment according to the invention. Furthermore, this receiver is preferably designed to receive the messages originating from a sender of messages in accordance with the invention.

The subject of the invention is also a computer program product. According to the invention, this product comprises functionalities for implementing the units of the security device for protecting messages or of the device for identifying messages, in accordance with any one of the modes of embodiment of the invention.

The expression "computer program product" is understood to mean a computer program medium, which may consist not only of a storage space containing the program, such as a disc or a cassette, but also of a signal, such as an electrical or optical signal.

The invention pertains moreover to a service announcement message intended to be despatched over a network to at least one receiver. This message includes :
- at least one part enciphered by means of respectively at least one modifiable current enciphering key,
- and at least one key identifier, respectively enabling at least one current identification keys to be selected from at least one predetermined set of available identification keys, the current identification key making it possible to identify the enciphered part respectively.

The enciphered part is a signature. Further, that message includes also a key modification binary indicator supplementing the key identifier, which makes it possible to signal a change of key, so that the current identification key can be held in memory until the key modification indicator signals a change of key.

This message is preferably obtained by means of a security device for protecting messages and is preferably intended for a device for identifying messages in accordance with any one of the modes of embodiment of the invention.

Another aspect of the invention is a security process for protecting messages intended to be despatched over a network from a sender, to at least one receiver comprising means for control of identification by a modifiable current identification key. The security process comprises:
- a step of selecting a current enciphering key from at least one predetermined set of available enciphering keys associated with that sender, making it possible to encipher at least a part of each of the messages, a change of key being authorized upon the despatching of any message, or of any message of a given type;
- a step of registering in this message a key identifier, enabling the receiver to select the current identification key from a predetermined set of available identification keys corresponding to the predetermined set of available enciphering keys, this key identifier enabling the receiver to modify the current identification key in such a way that this current identification key corresponds to the current enciphering key,
- and a step of enciphering the part of the message to be enciphered by means of the current enciphering key.

The enciphering step consists in producing a signature of this part and the messages are service announcement messages.

This security process for protecting messages is preferably implemented by means of a security device for protecting messages in accordance with any one of the modes of embodiment of the invention.

The invention also pertains to a process for identifying messages received via a network, each of these messages including a part enciphered by means of a modifiable current enciphering key. This identification process comprises :
- a step of extracting from this message a key identifier, by means of which a current identification key is selected from a predetermined set of available identification keys, the current identification key corresponding to the current enciphering key,
- and a step of identifying the enciphered part by means of the current identification key.

The enciphered part is a signature and the messages are service announcement messages.

Further, the identifying process is compliant with claim 19 or claim 20.

This process for identifying messages is preferably implemented by means of a device for identifying messages in accordance with any one of the modes of embodiment of the invention.

The invention will be better understood and illustrated by means of the following exemplary embodiments and implementations, which are in no way limiting, with reference to the appended figures in which:
- Figure 1 is a basic diagram showing a sender and a receiver of messages in accordance with the invention, implementing a first form of selection of the keys;
- Figure 2 represents in greater detail a first mode of embodiment of the sender of Figure 1, usable for authentication;
- Figure 3 illustrates the content of an ATVEF service. announcement message containing an authentication field, which is despatched by the sender of Figure 2;
- Figure 4 details the content of the authentication field of Figure 3;
- Figure 5 illustrates the content of an intermediate version of the message produced by the sender of Figure 2, with filling-in of the authentication field;
- Figure 6 shows sets of broadcasters of the radiobroadcasting type, controlled by a central server, involving senders in accordance with that of Figure 2;
- Figure 7 represents in greater detail a first mode of embodiment of the receiver of Figure 1, usable for authentication of ATVEF service messages in combination with the sender of Figure 2, but also in particular for the authentication of system service messages and for decryption;
- Figure 8 represents in greater detail a second mode of embodiment of the sender of Figure 1, usable for combined encryption and authentication;
- Figure 9 illustrates the content of an ATVEF service announcement message containing an authentication field and an encryption field, which is despatched by the sender of Figure 8;
- Figure 10 diagrammatically shows a signature library implementing a second form of selecting the keys, with blocks of keys, which is used as a variant in the sender of Figure 1;
- Figure 11 diagrammatically shows an authentication library with blocks of keys corresponding to the library of Figure 10, used as a variant in the receiver of Figure 1;
- Figure 12 illustrates the content of a variant of an ATVEF service announcement message containing an authentication field, which is despatched by the sender of Figure 2;
- and Figure 13 details the content of the authentication field of Figure 12.

The figures are regarded as forming an integral part of the disclosure.

In the figures, identical or similar elements are designated by the same references. Moreover, the functional entities described and illustrated do not necessarily correspond to physically distinct entities of the systems, but may for example consist of functionalities of one and the same piece of software or of circuits of one and the same component.

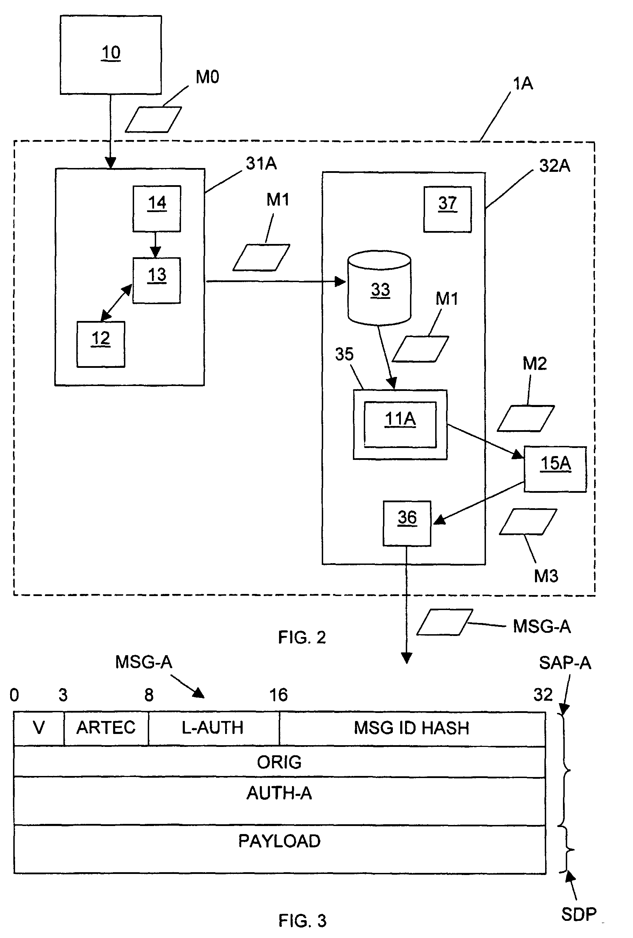

In Figures 3 to 5, 9, 12 and 13, the numbers indicated give, in bits, the distributions of fields in the messages represented. Moreover, the suffixes A and C are used to designate authentication entities, the suffix B for encryption entities and the suffix A' for authentication entities after encryption.

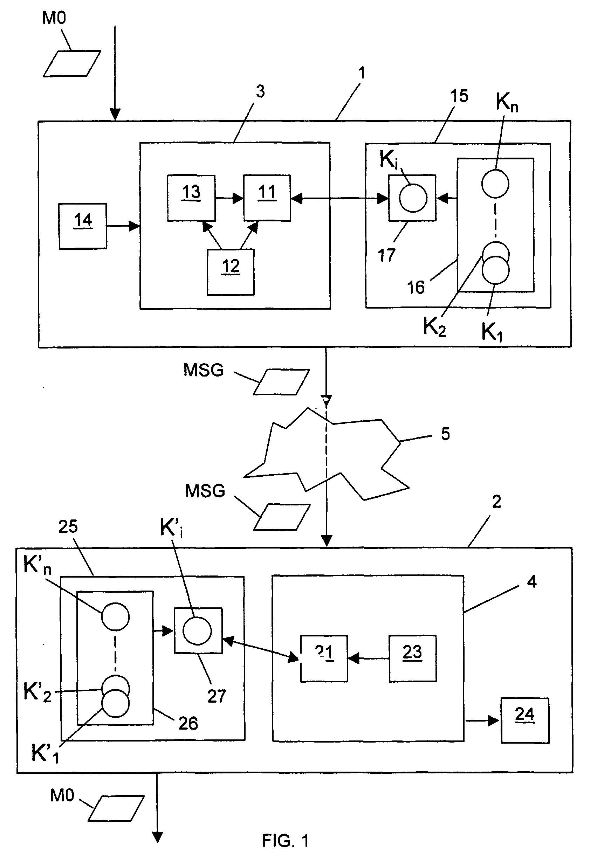

A send and receive assembly comprises (Figure 1) one or more senders 1 of MSG messages via a network 5 to one or more receivers 2. In the example detailed below, the network 5 is a broadcasting unidirectional transmission network and we concentrate on a broadcasting server (associated with the sender 1) sending to a plurality of customers (associated respectively with the receivers 2). For simplicity, we concentrate on just one of the senders 1 and one of the receivers 2.

Very diagrammatically, the sender 1 is provided so as to receive a message M0 and transform it into the message MSG to be sent, by adding various items of information intended for transfer over the network 5 and for the reading of the message MSG and of possible subsequent messages by the appropriate receivers 2. Correspondingly, the receiver 2 is provided to extract from the message MSG received the meaningful content represented by the message M0. The message M0 is preferably a message of a particular type (service announcement message), as detailed further below, the sender 1 and the receiver 2 not processing all the types of messages in the same way.

The sender 1 comprises in particular (Figure 1) various elements intended for this transformation of the message M0, such as in particular:
- a unit 14 for registering permissions, which is designed to insert permission identifiers PERM into the messages M0; these identifiers PERM make it possible to transmit control instructions to the receiver 2 for access to various functionalities of the latter;
- a device 3 for securely protecting messages, for defining judicious modes of enciphering (signature or encryption) of at least a part of the message M0, for triggering this enciphering and inserting information for utilizing the enciphered parts, intended for the receiver 2, into the message M0; in the example chosen, the registration unit 14 is upstream of the security device 3, in the sender 1; as variants, their positions are reversed, or at least one of these two subassemblies is upstream of the sender 1;
- and an enciphering library 15, for example a library of dynamic links or DLL (Dynamic Link Library), comprising an enciphering module 17; by convention, this library 15 is allocated to the sender 1, although in practice it may be a program simply accessible by the sender in the strict sense.

More precisely, the enciphering library 15 is furnished with an indexed table 16 of enciphering keys K₁, K₂ ... Kₙ, the enciphering module 17 being designed to perform the enciphering according to one of the enciphering keys Kᵢ, as a function of instructions given by the security device for protecting messages 3. Moreover, the latter comprises:
- an enciphering control unit 11, capable of triggering the enciphering module 17 by communicating the necessary information thereto, in particular regarding the choice of the enciphering key Kᵢ to be used;
- a unit 12 for changing current key, making it possible to modify the current key Kᵢ to be used by despatching corresponding information to the enciphering control unit 11; this unit 12 relies for example on random (both as regards the occurrences and the chosen values) modifications of the current key Kᵢ, with possibility of direct intervention by a user;
- and a unit 13 for registering in the message M0 a key identifier KeyID, making it possible to indicate for the attention of the receiver 2 the current enciphering key Kᵢ chosen; in the example presented, this registration unit 13 routinely performs the recording of the key identifier KeyID in the messages M0 of the type concerned.

Similarly, the receiver 2 comprises in particular:
- a unit 24 for reading the permission identifiers PERM in the message MSG received;
- a device 4 for identifying messages, for defining the relevant modes of identification (by deciphering/enciphering for authentication or decryption) of the enciphered part of the message MSG and for triggering this identification;
- and an identification library 25 comprising an identification module 27 and allocated by convention to the receiver 2.

More precisely, the identification library 25 is furnished with an indexed table 26 of identification keys K'₁, K'₂ ... K'ₙ, corresponding one by one to the enciphering keys K₁, K₂ ... Kₙ of the enciphering library 15. The identification module 27 is designed to perform the identification according to one of the identification keys K'ᵢ, as a function of instructions given by the message identification device 4. Moreover, the latter comprises:
- an identification control unit 21, capable of triggering the identification module 27 by communicating the necessary information thereto, in particular regarding the choice of the identification key K'ᵢ to be used;
- and a unit 23 for extracting from the message MSG the key identifier KeyID, giving the current identification key K'ᵢ chosen in correspondence with the current enciphering key K'ᵢ of the sender 2.

The succinct account given above is essentially functional, and it is exclusively centred around specific features in conjunction with a particular assembly for securely protecting and identifying messages. The sender 1 can in reality comprise several security devices such as that referenced 15, possibly in combination. For example, the secure protecting of the messages combines encryption and signature, and/or distinct devices are applied respectively to various types of message. Similarly, the receiver 2 can comprise several identification devices. Such possibilities will become more clearly apparent in the light of the examples hereinbelow of particular embodiments.

A first mode of embodiment of the sender 1, referenced 1A (Figure 2), is applied to authentication. In this embodiment, the sender 1A subjects only the service announcement messages M0 to the operations for securely protecting and registering the permission identifiers PERM, the other types of message (such as content messages and triggers) not being subjected thereto. The service announcement messages under consideration are by way of illustration ATVEF announcement messages or system announcement messages, these two types of message having a similar structure in the examples under consideration. The messages MSG produced, denoted MSG-A, are subjected to broadcasting via the network 5.

In the example set forth, the enciphering keys Kᵢ (signature keys) are moreover private keys, and the identification keys K'ᵢ (authentication keys) public keys which may be distributed to the customers, including possibly via the network 5 (transmission is then preferably securely protected). By way of more specific example, the signature keys Kᵢ have 596 bytes each and the identification keys K'ᵢ are deciphering keys of 148 bytes each, these keys being created respectively from the signature keys Kᵢ and transferred so as to reside at the customers' premises. The indexed tables 16 and 26 of respectively signature and authentication keys each comprise for example 10 corresponding keys.

The sender 1A essentially comprises:
- a server drive system 31, referenced 31A, including the unit 12 for changing current key, the unit 13 for registering the key identifier KeyID and the unit 14 for registering the permission identifiers PERM; this drive system 31A is designed to receive the message M0 from an information source 10 and to produce a message M1, containing the key identifier KeyID for authentication, denoted KeyID[SGN], and the permission identifiers PERM but without signature;
- a broadcasting server 32A comprising in particular a control unit 37 controlling the operation of all of the elements of the server 32A (links not represented in Figure 2 for simplicity) and a database 33 designed to gather the messages M1 originating from the drive system 31A; this broadcasting server 32A is intended to transform the message M1 into the message MSG-A;
- and the enciphering library 15, in the form of an authentication library 15A.

The broadcasting server 32A also comprises two modules acting successively on the message M1: a completion module 35 and an encapsulation module 36. The completion module 35, which contains the enciphering control unit 11 in the form of an authentication control unit 11A, is responsible for registering complementary information (Internet addresses, ports, etc.) in the message M1 so as to produce a message M2, and for calling upon the authentication library 15A so as to produce a signature SGN and integrate it into the message M2, thus producing a message M3. The presence of the authentication key identifier KeyID[SGN] in the message M2 despatched to the library 15A allows the latter to select the desired key Kᵢ immediately so as to generate the signature SGN. Advantageously, the current enciphering key Kᵢ is held in memory in the library 15A.

The subcontracting by the broadcasting server 32A of the signature to the library 15A, as well as the possible recording of the current key Kᵢ in the library 15A rather than in the server 32A, allow the latter to retain a character of a general nature. What is more, they allow the drive system 31A and the library 15A to retain together control of the operations relating to the key identifiers KeyID[SGN] and permission identifiers PERM. Moreover, the addition of the signature SGN at the end of the chain, just before broadcasting by the broadcasting server 32A, is beneficial since the latter can thus be fed by numerous customers without it being necessary to duplicate the signature library 15A and the enciphering keys Kᵢ, and since the modification of the key identifier KeyID[SGN] can be centralized. Furthermore, in case of compression and/or encryption, the signature is effected after these operations.

The signature SGN is calculated preferably over the whole of the announcement message M2, including the header (which contains in particular the identifiers KeyID[SGN] and PERM) and the payload, thus making it possible in particular to detect any external modification of the data relating to the current signature key KeyID[SGN] (hence for authentication by the customers) and to the permissions.

The encapsulation module 36 is intended to transform the announcement message M3 by chopping and addition of layers for transport over the network 5. In the example presented, the module 36 generates IP (Internet Protocol) packets with UDP (Unidirectional Data Protocol)/IP/SLIP (Serial Line IP) layers. For content messages, the module 36 uses, beforehand, the UHTTP (Unidirectional HyperText Transfer Protocol) protocol and the MIME (Multipurpose Internet Mail Extensions) format.

The message MSG-A thus signed allows each of the customers to verify the authenticity of the services provided: if the customer recognizes the signature SGN as valid, he opens listening channels (sockets) for the content messages and possibly the triggers which have to follow. In the converse case, the customer declines to take the announcement message MSG-A into consideration. To authenticate the signature SGN, the customer uses the key identifier KeyID[SGN], which allows him immediately to select the appropriate identification key K'ᵢ from the corresponding identification library 25 (authentication library). He is thus able to decide rapidly whether to open the sockets or not and thus avoid missing out on all or some of the content packets arriving subsequently. For example, when a first content packet is broadcast 500 ms after the announcement message, it is absolutely essential for all the signature verification and socket opening operations to have been executed during this time span.

A specific implementation of the sender 1A is illustrated hereinbelow. In this example, the announcement messages MSG-A of the ATVEF type are broadcast on a multicast IP address 224.0.1.113, port 2670, and those of the system type on a multicast IP address 235.0.1.113, port 32670. Each of the messages MSG-A (Figure 3) consists of a header in the SAP format denoted SAP-A and a payload in the SDP format, the header SAP-A comprising the following fields:
- version V of SAP (3 bits, V=1);
- ARTEC (5 bits) composed of 5 items:
   - type of address A (0 for the IPv4 protocol, 1 for IPv6);
   - reserved field R (0);
   - type of message T (0 for a session announcement packet, 1 for a session erasure packet);
   - encryption field E (for "Encryption": 0 for SDP unencrypted, 1 for SDP encrypted);
   - compression C (0 for uncompressed payload, 1 for compressed payload);
- length L-AUTH (unsigned value on 8 bits) of an authentication field AUTH referenced AUTH-A and inserted just before the SDP, and expressed as a number of 32-bit words;
- hash identifier (protection algorithm used by the Internet for digital signatures) MSG ID HASH (on 16 bits), the hash value having to change whenever a field of the SDP is modified; when this identifier equals 0, the customer must always subject the SDP to a syntactic analysis (parsing);
- IP address denoted ORIG (1 word of 32 bits) of the sender 1A, hence of the broadcasting server 32A; this address can be set to 0.0.0.0 for a zero value of the hash identifier and in the absence of passage through a mandatory server (proxy);
- and authentication field AUTH-A, whose length is determined by the parameter L-AUTH.

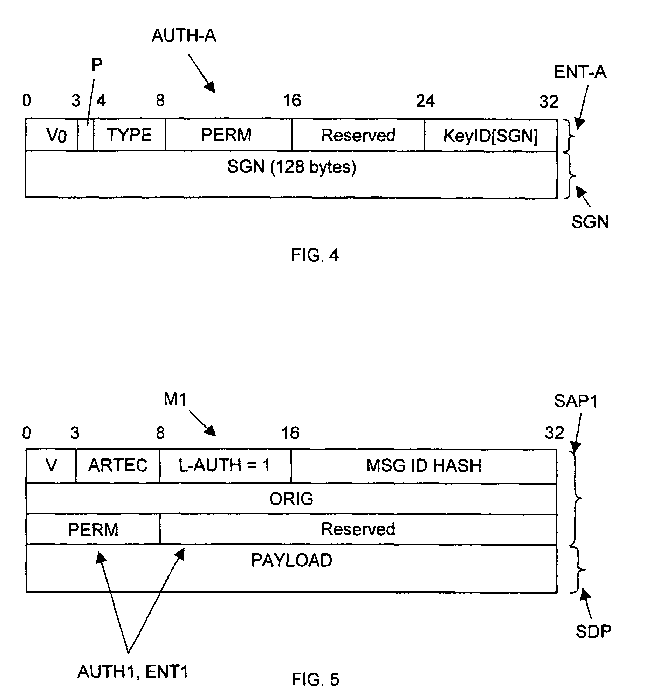

The authentication field AUTH-A (Figure 4) comprises not only a signature field SGN of 128 bytes (size chosen as a function of system limitation), but also a specific authentication header denoted ENT-A occupying four bytes, which includes the following subfields:
- version V of protocol used (3 bytes, V=1);
- padding indicator P (1 bit), which serves to signal the presence of possible padding so as to culminate in an authentication field having a total length which is a multiple of double-words (32-bit words); in the present case, P=0 (no padding) since the authentication field has a total length of 132 bytes;
- type of authentication used TYPE (4 bits); in this instance, TYPE=0 (PGP format, standing for Pretty Good Privacy);
- PERM permission flags (8 bits);
- field reserved (8 bits) for future use;
- key identifier KeyID[SGN] (8 bits).

The header ENT-A therefore contains two bytes which are especially useful for the customers: those of the fields KeyID[SGN] and PERM, which respectively allow the customers to immediately determine the correct authentication key K'ᵢ and to ascertain the appropriate permissions in respect of the subsequent messages of the service (content messages and triggers).

In the example presented, the byte available for the permission flags PERM is utilized in the form of a mask of eight values. The permission flags PERM pertain to accesses to the following functionalities, relating to so-called critical resources of the receiver 2 (the authorization values are first given in hexadecimal notation):
- 0x0001: access to a modem of the receiver 2 so as to initiate a connection to an online server of a service operator associated with the sender 1;
- 0x0002: access to a modem of the receiver 2 so as to initiate a connection to an online server of any service operator;
- 0x0004: use of a secure connection to an online server;
- 0x0008: access to a hard disk of the receiver 2 so as to read data therefrom or write data thereto permanently;
- 0x00010: access to a flash memory of the receiver 2 so as to read data therefrom or write data thereto permanently;
- 0x00020: access to a chip card of the receiver 2 so as to read data therefrom or write data thereto permanently;
- 0x00040: access to a tuner of the receiver 2 so as to modify a current station.

In a variant embodiment, the byte available for the permissions is used in the form of a table with 256 entries, each of the entries corresponding to a unique permission level. As in the example above, eight permissions are obtained which can be combined with each other.

The number of permissions can be extended without difficulty, in particular by incorporating the reserved field of one byte into the permission field (switch to sixteen permissions) and/or by allocating two double-words instead of one to the header ENT-A of the authentication field AUTH-A.

During operation, the drive system 31 adds a header in the SAP format to the service announcement message M0, integrating therein in particular the permission flags PERM for this service and possibly a key identifier KeyID[SGN] (the latter is configurable by the drive system 31, but by default, is determined by the library 15A). The length L-AUTH of the authentication field AUTH-A is fixed at one double-word (L-AUTH=1), in such a way as to register the header ENT-A therein without the signature SGN. The message M1 obtained (Figure 5) then contains in the authentication field AUTH1 (reduced to a header ENT1) of the header in the SAP format (denoted SAP1) only the permission flags PERM and a reserved field, initialized to zero. This message is received in the database 33 of the broadcasting server 32A.

The completion module 35 then verifies whether the header SAP1 is present (if not, it adds it without signature), registers in M1 the complementary information required (so-called patch of the SDP with addresses and ports of the content messages and triggers), and calls upon the library 15A, passing as arguments a buffer memory containing the message M1 and a size of the buffer.

The library 15A performs the following operations:
- verification of whether the permission flags PERM are present; if they are, normal continuation of operations; if they are not, return to the broadcasting server 32A with error code; in an improved version, should the permission flags PERM be absent, allocation of a default mask;
- verification of whether the service announcement message M1 is already signed; if it is, return to the broadcasting server 32A;
- if it is not, updating of the length L-AUTH to 132 bytes (0x21 double-words), addition and updating of the header ENT-A of the authentication field AUTH-A, calculation (with L-AUTH=1) and addition into the buffer of the signature SGN and updating of the size of the buffer; the signature SGN is determined from the header SAP1 as a whole (not containing the signature field SGN, since L-AUTH=1) and from the payload of the message M1; it is obtained by the RSA (Rivest - Shamir - Adleman) algorithm, by means of the calculation of a hash MD5 over this whole, of the recovery of the appropriate current signature key Kᵢ and of the calculation of the RSA signature on hash with this key Kᵢ; in a variant embodiment, the authentication field AUTH-A is totally ignored in respect of the signature (L-AUTH=O instead of a double-word);
- and return to the broadcasting server 32A.

Next, the encapsulation module 36 encapsulates the message M3 thus obtained, before broadcasting over the network 5.

With this technique, the signature is calculated just once per service (it is calculated on the announcement message), whether this service be despatched as a carousel or in one occurrence (one shot).

To modify the key identifier KeyID[SGN], a message is for example despatched to the broadcasting server 32A across an interface for the programming of applications or API (Application and Programming Interface), the server 32A then merely notifying the library 15A of the new value of this identifier - the modification is for example performed routinely every month.

In an illustrative example hereinbelow of service announcement messages at input (M1) and at output (MSG-A) of the broadcasting server 32A, the header SAP1 is indicated by bold characters between square brackets, the header (ENT1, ENT-A) of the authentication field (AUTH1, AUTH-A) being underlined, and the payload being indicated by normal characters (the notation is hexadecimal).

The message M1, associated with L-AUTH=0x01, PERM=0x27 and with three reserved bytes equal to 0x00, is as follows:

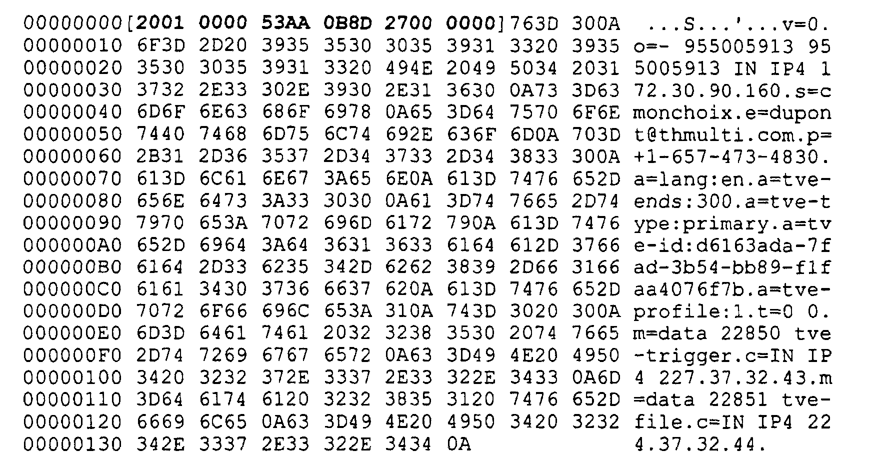

The message MSG-A obtained after processing of the message M0 by the broadcasting server 32A, associated with L-AUTH=0x21 , PERM=0x27 and KeylD=0x07, is as follows:

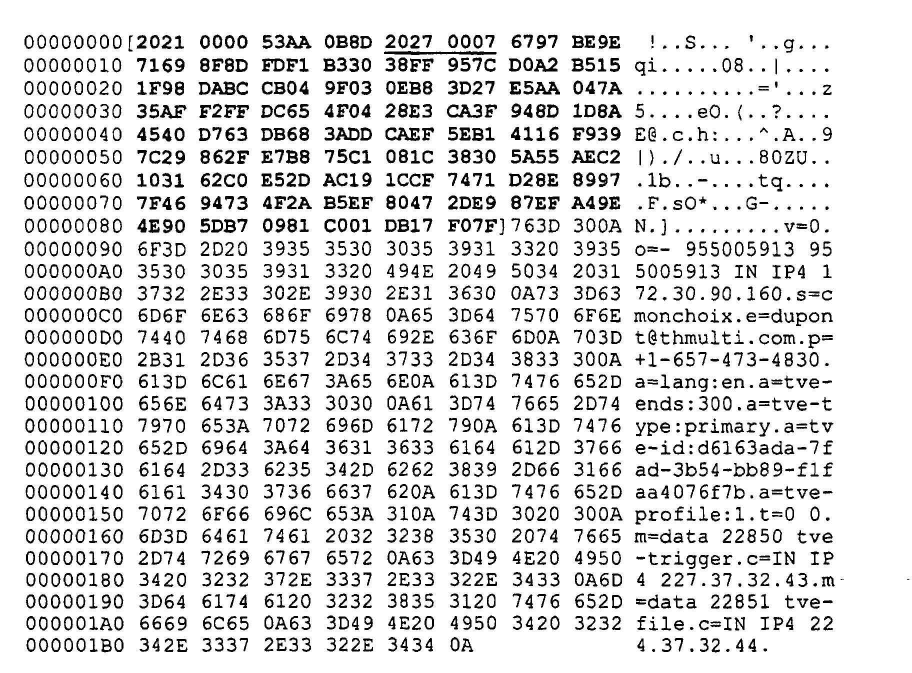

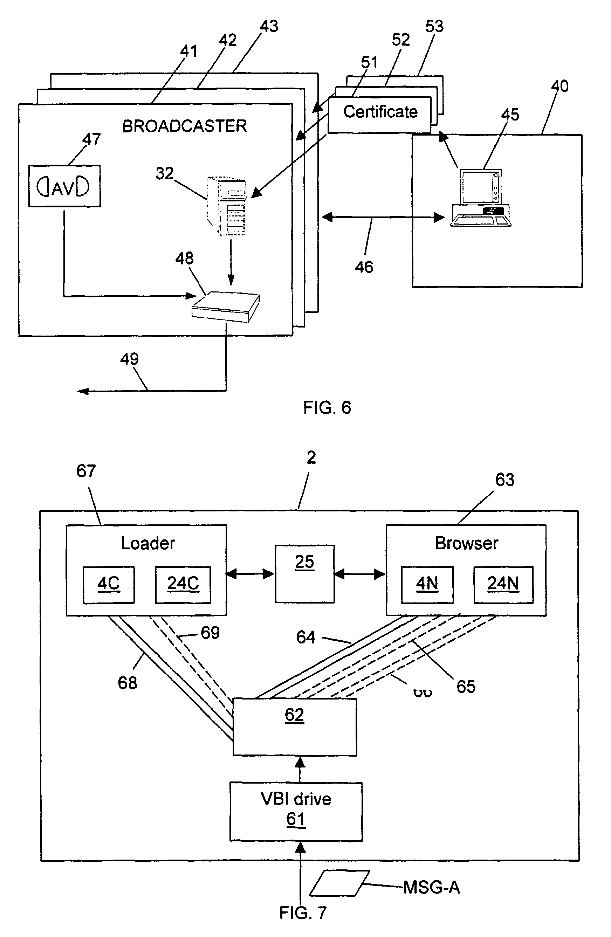

In a particular deployment of senders 1A (Figure 6), a central drive system 40 of a service operator, comprising a central server 45, is connected to broadcasters 41, 42 and 43 via specialized links (leased lines) 46.

Each of the broadcasters 41-43 comprises a broadcasting server 32, of the type of that 32A detailed hereinabove, as well as a device 47 for broadcasting audiovisual programmes and a VBI encoder referenced 48, responsible for encoding information originating from the server 32 and from the device 47 and for broadcasting it to the antenna 49. During operation, the central drive system 40 obtains from various sources (broadcasters, advertisers, content providers, etc.) information regarding services to be broadcast, programs their broadcasting and finally makes them available to the broadcasting server 32 slightly before their broadcasting. It guarantees in particular the authenticity of public keys through the delivery of digital certificates 51, 52 and 53 to the broadcasters 41 to 43 respectively. This central drive system 40 also fulfils the functions of the drive system 31 described above, so that the service announcement messages MSG broadcast by the broadcasters 41 to 43 can be selectively advised of the permissions and be signed by means of variable keys, without giving rise to adverse delays of authentication on reception.

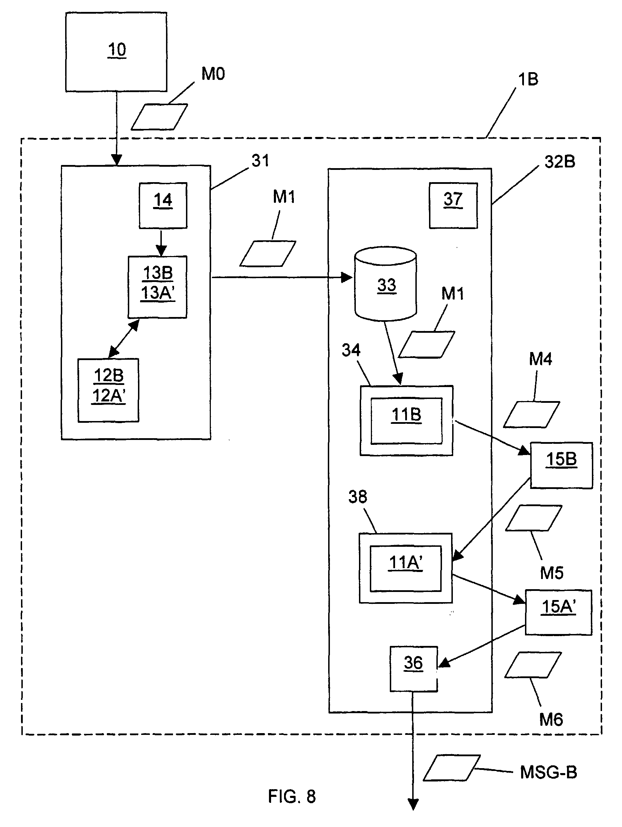

Each of the receivers 2 comprises in particular (Figure 7):
- a VBI drive referenced 61, designed to extract a payload from information received from the senders 1A (such as the broadcasters 41 to 43) and comprising a field WST (World Standard Teletext), to calculate error control codes FEC (Forward Error Correction) and to control a decoding of SLIP frames of the payload;
- a module 62 for decapsulating layers for transport on the network 5, capable of receiving from the drive 61 the decoded SLIP frames and of extracting therefrom, after decoding, the content of the IP/UDP frames, in the form of a header in the SAP format and of a payload in the SDP format for the service announcement messages MSG;
- a browser 63, provided with an identification device 4 and with a permission reading unit 24 (referenced 4N and 24N respectively), of the type of those described above,
- a loader 67, provided with an identification device 4 and with an optional permission reading unit 24 (referenced 4C and 24C respectively), of the type of those described above,
- and an authentication library of the type of that referenced 25 described above; the indexed table 26 of keys is stored in a permanent memory of the receiver 2, for example of the flash memory type, in a code of the library 25.

The browser 63 is designed to perform the following functions on receipt of each service announcement message MSG-A:
- recover the header and the payload of the message MSG-A via a listening socket 64;
- call a signature verification function in the library 25, by passing it as input a pointer to the message MSG-A;
- and should authentication succeed, open listening sockets 65 and 66 respectively for the content messages and the subsequent triggers, by applying the permissions indicated by the permission flags PERM of the message MSG-A so as to specify access to the functionalities of the browser 63 to be applied to the broadcast application.

The library 25 signature verification function executes more precisely the following operations:
- calculation of a hash MD5 on the signatureless header SAP-A and payload as a whole, the indicator L-AUTH giving the length of the authentication field AUTH-A being set to 1; in a variant corresponding to that indicated for the signature calculation, the authentication field AUTH-A is ignored in respect of authentication, the indicator L-AUTH being set to 0;
- recovery of the key identifier KeyID[SGN] in the authentication field AUTH-A of the header SAP-A and selection of the appropriate authentication key K'ᵢ;
- verification of the signature SGN of the authentication field AUTH-A, of the RSA type, by recalculation on the hash of the signature by means of the selected key K'ᵢ; should the signature be invalid, return of the value 0;
- if the signature SGN is valid, return of the permission flags PERM.

Thus, the payload of the message MSG-A is ignored except in the case where authentication succeeds. In the converse case, no listening socket is opened for the subsequent messages of the service announced and the customer remains deaf to the data which arrive.

The operation of the loader 67 is similar in respect of a system announcement message, received via a listening socket 68: a socket 69 is opened for subsequent content messages only if the message is authenticated, by means of a call to the library 25.

A second mode of embodiment of the sender 1, referenced 1 B (Figure 8), is applied to a combination of encryption and authentication. This embodiment differs from the previous one essentially by the presence in the sender 1B of encryption elements, complementary to the signature elements and designed to act upstream of them. The encryption elements and those of the signature rely respectively on the selection of two current enciphering keys from two indexed tables 16 of keys (Figure 1), and call respectively on an encryption library 15B and a signature library 15A', of the type of the enciphering library 15 described in a general manner above. The receiver 2 includes an indexed decryption table corresponding to the indexed table of encryption keys, these decryption keys being preferably private. The indexed encryption and decryption tables comprise for example 10 keys each.

Thus, the drive system 31, referenced 31 B, comprises both units 12 for changing current key and also devices 13 for securely protecting messages for he encryption (respectively 12B and 13B) and for signature after encryption (respectively 12A' and 13A').

Moreover, the broadcasting server 32, referenced 32B, comprises a completion and encryption module 34 including an encryption control unit 11B and a signature module 38 downstream of the module 34, including a signature control unit 11A', the control units 11B and 11A' being of the type of the enciphering control unit 11. This server 32B integrates an authentication field AUTH, referenced AUTH-B, into the header in the SAP format, in a similar manner to the first mode of embodiment.

The completion and encryption module 34 is responsible for adding complementary information required in the message M1 as in the previous mode of embodiment, and for calling on the encryption library 15B so as to encrypt the message M4 thus obtained, by transmitting an encryption key identifier KeyID[CRYPT] thereto. The enciphering module 17 of the library 15B (Figure 1) then carries out the encryption of the payload, but not of the initial data of the header or of the authentication field AUTH-B. The key identifier KeyID[CRYPT] is for example generated randomly.

The signature module 38 is designed to receive from the encryption library 15B a message M5 resulting from this encryption and comprising in particular an authentication key identifier KeyID[SGN], and to call on the signature library 15A' so as to obtain a signed message M6. The enciphering module 17 of the library 15A' (Figure 1) determines and affixes a signature pertaining to the message M5 as a whole, by means of the current key given by the key identifier KeyID[SGN], as in the previous mode of embodiment.

The encapsulation module 36 plays the same role as previously and makes it possible to obtain the message MSG to be broadcast, denoted MSG-B.

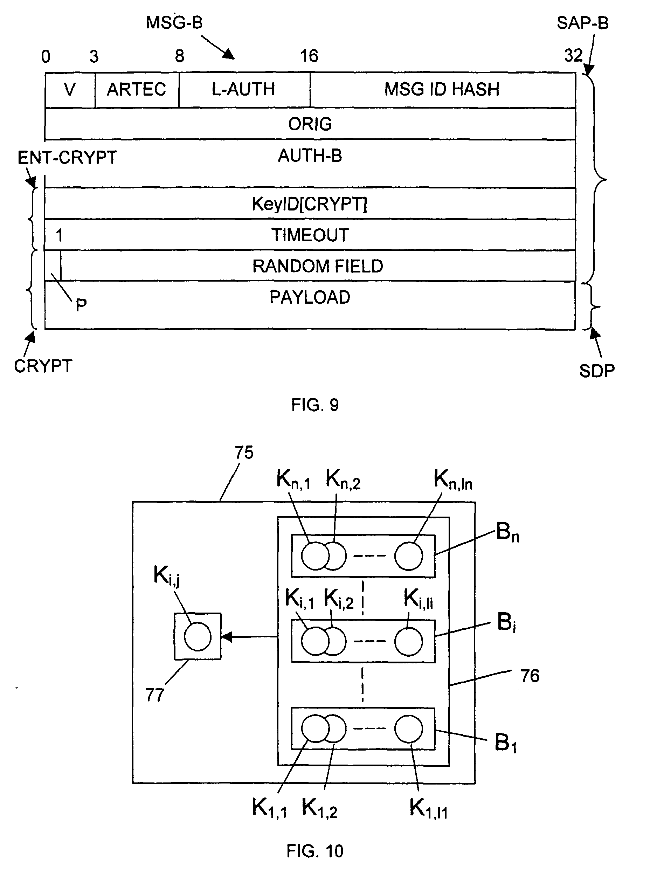

By way of illustration (Figure 9), the message MSG-B comprises, in addition to its payload, a header in the SAP format referenced SAP-B which is structured as follows:
- fields V, ARTEC, L-AUTH, MSG ID HASH and AUTH-B similar to those of the first mode of embodiment;
- encryption key identifier KeyID[CRYPT] (1 double-word);
- indicator of time exceeded TIMEOUT (1 double-word), useful when the payload is encrypted and when the sending of the announcement message involves a proxy;
- padding indicator P (1 bit), signalling padding before encryption; the last byte of the decrypted payload then gives the number of padding bytes added;
- and random field (31 bits) containing a true random number and intended to be discarded after decryption.

The set CRYPT of encrypted fields consists of the indicator P, of the random field and of the payload, while the identifier KeyID[CRYPT] and the field TIMEOUT form an unencrypted encryption header ENT-CRYPT.

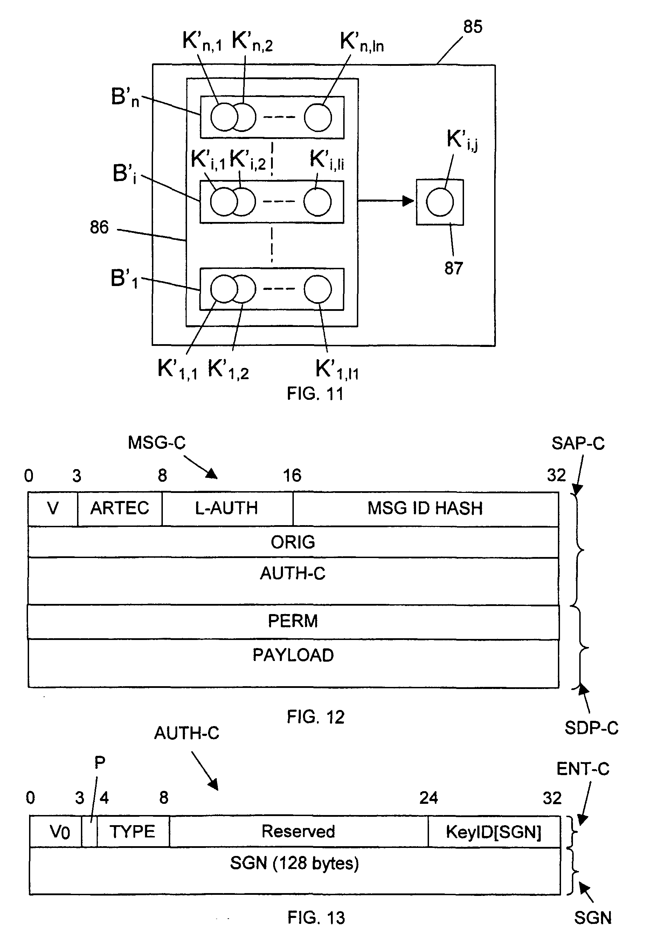

In a variant embodiment applicable to any one of the pairs of associated enciphering and identification libraries (Figures 10 and 11), the enciphering library 75 comprises an indexed table 76 of blocks B₁, B₂ ... Bₙ of enciphering keys, instead of a table of keys. Each of the blocks Bᵢ itself includes several keys K_{i,1}, K_{i,2} ... K_{i,li}, whose number may vary according to the block considered. Similarly, the identification library 85 comprises an indexed table 86 of blocks B'₁, B'₂ ... B'ₙ of identification keys, each of the blocks B'ᵢ including several keys K'_{i,1}, K'_{i,2} ... K'_{i,li} corresponding respectively to the keys K_{i,1}, K_{i,2} ... K_{i,li} of the blocks Bᵢ of the enciphering library 75.

Knowledge of the key identifier KeyID does not therefore make it possible to ascertain in a one-to-one manner the key K_{i,j} chosen for the enciphering by the enciphering module 77, and hence the associated identification key K'_{i,j} which is to be used by the identification module 87 of the library 85, but only the blocks Bᵢ and B'ᵢ to which these keys respectively belong. All the keys of the identified block B'ᵢ must therefore be tried in succession until the decryption succeeds.

According to a variant deployment of the identifiers, the authentication key identifier KeyID[SGN] and/or permission identifier PERM are outside the authentication field AUTH in the header of the message MSG. Thus, the messages for authentication can be enciphered by including these identifiers in the signature calculation SGN, but while excluding the authentication field AUTH (L-AUTH=0) therefrom.

In another mode of embodiment (Figures 12 and 13), the permission flags PERM are disposed in the payload field. According to the example illustrated, the service announcement message MSG produced, referenced MSG-C, contains a header in the SAP format, denoted SAP-C, without permissions but with a reserved field of two bytes in the header ENT-C of the authentication field AUTH-C. Its payload in the SDP format, denoted SDP-C, includes the permission flags PERM on two bytes, for example at the start of the field. The permissions field needs more payload space than header space, since it now requires writing in text rather than binary format, and a permissions field identification label.

An exemplary application in the digital broadcasting of data according to the MHP standard, over networks meeting the MPEG-2 standard, will now be detailed. This example relates to the protection of PMT tables (Program Map Tables) specified in the MPEG-2 standard (ISO/IEC 13818-1) and of AIT tables (Application Information Tables), the scrambling of the PMT tables being prohibited by the MPEG-2 standard. For the mechanisms described, a root certification authority is established, as optionally are other certification authorities.

A PMT table constitutes an important entry point for the signaling of a service, interactive or otherwise. In the case of interactive MHP applications, the PMT table contains the positions of the stream transporting the AIT table and of the stream transporting the code and the application data (pointer to the DSM-CC DSI, standing for "Digital Storage Media - Command and Control" and "Digital Speech Interpolation").

The protection of the signalling is based on hash codes, signatures and certificates. The coding of these cryptographic messages is done by introducing three new descriptors, denoted hash_descriptor, signature_descriptor and certificate_descriptor respectively.

The first descriptor, hash_descriptor, can be placed in the first or the second loop of the AIT or PMT table. The hash code is calculated on the descriptors to which the pointer is pointing, in a specific loop. A descriptor loop of the next hierarchical level can include hash codes of the lower level. The syntax of the hash_descriptor is for example defined by means of the following parameters:
- digest_count: 16-bit value identifying the number of preprocessing values (digest values) in this hash descriptor;
- digest_type: 8-bit value identifying the preprocessing algorithm which may possibly be used for associated descriptors; the authorized values are chosen from among:
   - 0 : preprocessing length 0, non authentication;
   - 1 : preprocessing length 16, hash algorithm MD5 as defined in document RFC 1321;
   - 2 : preprocessing length 20, hash algorithm SHA-1 (SHA standing for "Secure Hash Algorithm") as defined in document FIPS-180-1;
   - others : possibilites reserved;
- descriptor_count: 16-bit value identifying the number of descriptors associated with the preprocessing value; this value must be larger than zero;
- descriptor_pointer: pointer identifying a descriptor which forms part of the hash calculation;
- descriptor_tag : tag of the descriptor to which the descriptor_ pointer parameter is pointing;
- digest_length : integer value giving the number of bytes in each preprocessing value; it depends on the type of preprocessing as indicated above in respect of the digest-type parameter ;
- digest_byte: 8-bit value containing a byte of the preprocessing value.

The syntax of the hash_descriptor descriptor is thus written :

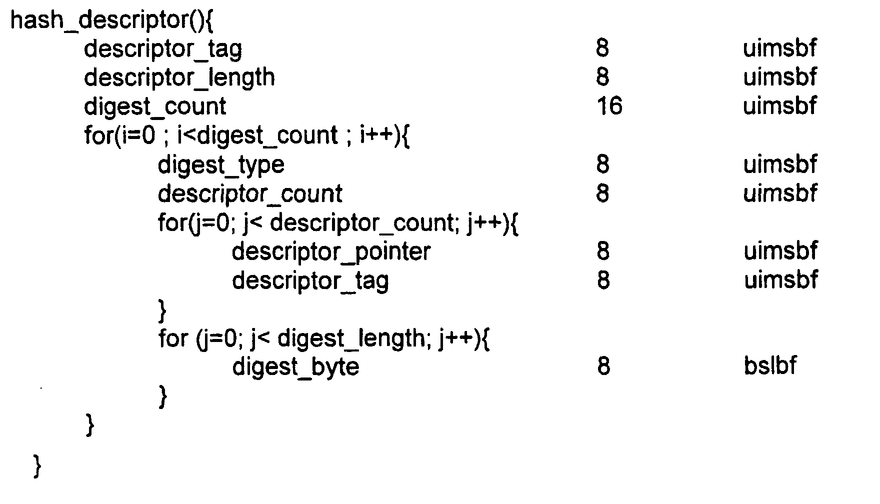

For the second descriptor, signature_descriptor, the following parameters are used (in addition to parameters already defined for the hash_descriptor descriptor):
- signature_id : this identifier makes it possible to employ signatures of several authorities;
- signature_length : indicates the length of the next loop; as well as a signature specific field described below.

This descriptor, which is placed ahead of the first hash_descriptor descriptor in a descriptor loop, has the following syntax :

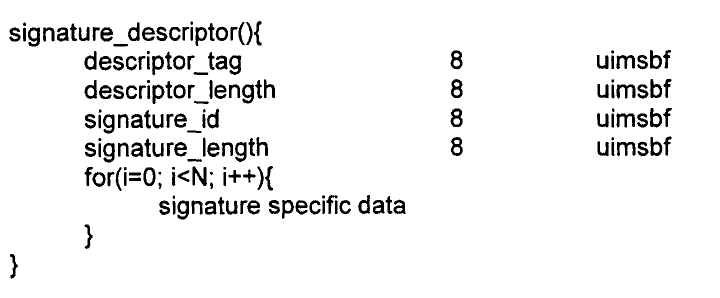

The "signature specific data" field contains the structure which follows, expressed in the ASN.1 (standing for « Abstract Syntax Notation one ») DER specification language : 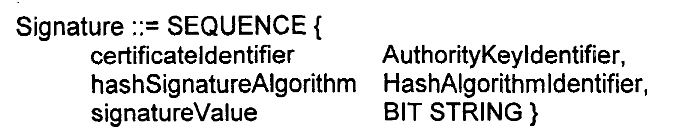 whose "signatureValue" field gives the signature value (in the form of a string of bits "BIT STRING"), this value depending on the choice of MHP specification, and whose other "certificateldentifier" and "hashSignatureAlgorithm" fields are defined hereinbelow.

The certificateldentifier field identifies the certificate bearing a certified public key used to verify the signature. It is defined according to the ITU-T (standing for "International Telecommunication Union - Telecommunications Standardization Sector") extension X.509 [54] for the AuthorityKeyldentifier type field. The structure of the latter contains in particular an optional key identification field KeyIdentifier (Keyldentifier type). It also contains an authorityCertlssuer (GeneralNames type) element, itself containing a "directoryName" field having the value of the certificate bearing the public key used, as well as an authorityCertSerialNumber (CertificateSerialNumber type) element giving a corresponding serial number. These two elements, *a priori* optional in the AuthorityKeyldentifier field type must be filled in. We thus have :

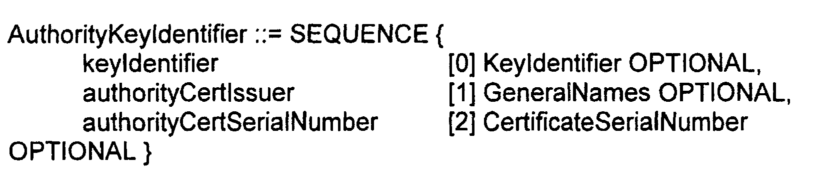

The hashSignatureAlgorithm field identifies the hash algorithm used. The encryption algorithm employed to calculate the signature need not be specified here, since it is already described in a SubjectKeyInfo field of the certificate certifying the key. The two algorithms provided for are MD5 and SHA-1, whose structures are as follows:
md5 OBJECT IDENTIFIER ::=
   {iso(1) member-body(2) US(840) rsadsi(113549)
   digestAlgorithm(2) 5}
sha-1 OBJECT IDENTIFIER ::=
   {iso(1) identified-organization(3) oiw(14) secsig(3)
   algorithm(2) 26}

The third descriptor, certificate_descriptor, makes it possible to construct a CertificateFile file, which contains all the certificates of the certification string, up to and including the root certificate. The leaf certificate and the root certificate are placed respectively first and last in the descriptor, the latter being included only for consistency. The certificate coding profile is defined in the ETSI (standing for "European Telecommunications Standard Institute") Standard TS 102 812 V1.1.1.

The certificate_descriptor descriptor, placed ahead of the first signature_descriptor descriptor in a descriptor string, contains a "certificate()" field bearing a single "certificate" data structure as defined by the ITU-T X.509 Standard. The structure of the descriptor is expressed as a function of the following parameters:
- signature_id : identifier tying the certifications to a specific signature;
- certificate_here_flag : 1-bit field indicating that the certificates are disposed in the descriptor should the value be 1, and that the certificates of an application must be used, otherwise, a tie then having to be defined;
- certificate_count: 16-bit integer indicating the number of certificates in the certificate descriptor;
- certificate_length : 24-bit integer specifying the number of bytes in the certificate.

The structure of the certificate_descriptor descriptor is specified thus :

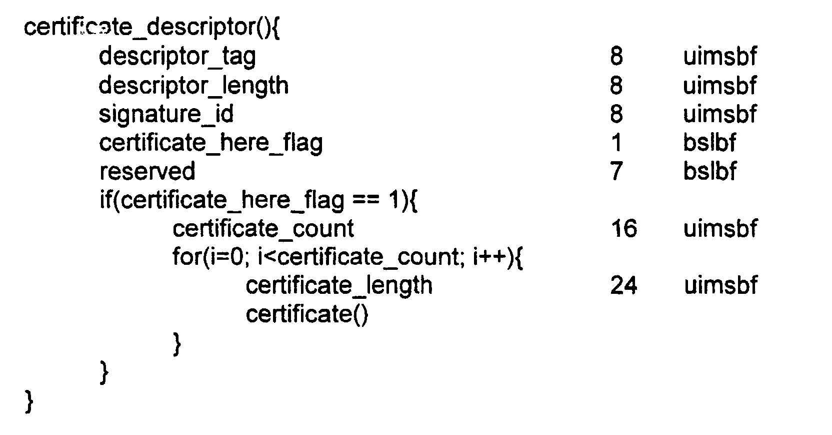

The method set forth makes it possible to protect PMT and AIT tables against piracy operations. Moreover, in network head-ends, it can happen that streams are remultiplexed and that PID identification packets or event PMT table contents are modified on account of network requirements. Such remultiplexings are allowed for by the method developed hereinabove in so far as only a subselection of descriptors is authenticated or else a remultiplexing apparatus reauthenticates the modified descriptors.

Although the above description is aimed at the authentication of PMT and AIT tables, the method set forth is also applicable to any other type of table defined according to the MPEG/DVB Standards, such as for example PAT, CAT, NIT, SDT, EIT, SIT or DIT tables.

## Claims

1. Security device (3) for protecting messages (MSG) intended to be despatched over a network from a sender (1), to at least one receiver (2) comprising means for control of identification (21) of messages (MSG) by a modifiable current identification key (K'ᵢ, K'_{i,j}), said messages (MSG) being service announcement messages and said security device (3) comprising:
- a unit for control of enciphering (11) of at least a part of each of said messages (MSG) by means of a modifiable current enciphering key (Kᵢ, K_{i,j}),
- means of control (11A, 11A') of addition to each of said messages (MSG), of a signature (SGN) consisting of a result of the enciphering of said part of said message by means of said current enciphering key (Kᵢ, K_{i,j}),
- and a unit (13) for registering in said message (MSG) a key identifier (KeyID), enabling the receiver (2) to select the current identification key (K'ᵢ, K'_{i,j}) from a predetermined set (26, 86) of available identification keys (K'₁...K'ₙ: K'_{1,1}...K'_{n,ln}), said key identifier (KeyID) enabling said receiver (2) to modify the current identification key (K'_{i,} K'_{i,j}) in such a way that said current identification key (K'_{i,} K'_{i,j}) corresponds to the current enciphering key (K_{i,} K_{i,j}),
**characterized in that** said security device (3) comprises a unit for changing (12) said current enciphering key (K_{i,} K_{i,j}), designed for selecting said key (K_{i,} K_{i,j}) from a predetermined set (16, 76) of available enciphering keys (K₁...Kₙ , K_{1,1}...K_{n,ln}) associated with said sender (1) and corresponding to said predetermined set (26, 86) of available identification keys (K'₁...K'ₙ ; K'_{1,1}...K'_{n,ln}), said changing unit authorizing a change of key upon the despatching of any message, or of any message of a given type.

2. Security device (3) according to Claim 1, **characterized in that** said security device (3) is adapted to supplement said key identifier (KeyID) with a key modification binary indicator, the current identification key (K'_{i,} K'_{i,j}) being intended to be held in memory on reception, until said key change indicator signals a change of key.

3. Security device (3) according to Claim 1, **characterized in that** said security device (3) is such that said key identifier (KeyID) is specified only in the case of an actual change of key and is otherwise replaced by a default value, signaling that the current identification key (K'ᵢ, K'_{i,j}) previously used is still valid, thereby enabling the receiver (2) to replace said current identification key (K'ᵢ, K'_{i,j}) only when said key identifier (KeyID) has another value than the default value.

4. Security device (3) according to any one of the preceding claims, **characterized in that** the predetermined set (26, 86) of available identification keys (K'₁... K'ₙ ; K'_{1,1}... K'_{n,ln}) is a set of deciphering keys.

5. Security device (3) according to any one of the preceding claims, **characterized in that** said part of said message consists of said message in full minus signature, including the key identifier (KeyID[SGN]).

6. Security device (3) according to any one of the preceding claims, **characterized in that** said messages (MSG) are chosen at least from among ATVEF announcement messages and system announcement messages.

7. Security device (3) according to any one of the preceding claims, **characterized in that** each of said messages having an authentication field (AUTH) of variable length (L-AUTH), the registering unit (13) is designed to register the key identifier (KeyID) in said authentication field (AUTH).

8. Security device (3) according to any one of the preceding claims, **characterized in that** said messages (MSG) are chosen at least from among MHP signalling messages.

9. Security device (3) according to any one of the preceding claims, **characterized in that** each of said key identifiers (KeyID) is associated with a determined one of the available enciphering keys (K₁... Kₙ) and with a determined one of the available identification keys (K'₁...K'ₙ) corresponding to said enciphering key.

10. Security device (3) according to any one of Claims 1 to 8, **characterized in that** each of said key identifiers (KeyID) is associated with a determined block (Bᵢ) of enciphering keys (K'_{i,j}) from among the set (16, 76) of available enciphering keys (K_{1,1}...K_{n,ln}) and with a determined block (B'ᵢ) of identification keys (K'_{i,j}) corresponding respectively to said enciphering keys (K'_{i,j}), from among the set (26, 86) of available identification keys (K'_{1,1}... K'_{n,ln}).

11. Security device (3) according to any one of the preceding claims, **characterized in that** the registering unit (13) is designed to choose the key identifier (KeyID) from among a number of values lying between 8 and 12, and preferably equal to 10.

12. Sender (1) of messages (MSG), **characterized in that** it comprises at least one security device (3) in accordance with any one of Claims 1 to 11, said sender being preferably designed to send the messages (MSG) by broadcasting.

13. Device (4) for identifying messages (MSG) received via a network, each of said messages (MSG) including a part enciphered (SGN) by means of a modifiable current enciphering key (Kᵢ, K_{i,j}), said messages (MSG) being service announcement messages and said identification device (4) comprising:
- a unit for control of identification (21) of said enciphered part (SGN), by means of a modifiable current identification key (K'_{i,} K'_{i,j}),
- and a unit (23) for extracting from said message (MSG) a key identifier (KeyID), enabling the current identification key (K'_{i,} K'_{i,j}) to be selected from a predetermined set (26, 86) of available identification keys (K'₁...K'ₙ; K'_{1,1}...K'_{n,ln}) corresponding to a predetermined set (16, 76) of available enciphering keys (K₁...Kₙ ; K_{1,1}...K_{n,ln}), in such a way that said current identification key (K'_{i,} K'_{i,j}) corresponds to said current enciphering key (K_{i,} K_{i,j}),
said identification control unit (21) being a unit for control of authentication of the enciphered part (SGN) and said enciphered part being a current signature,
**characterized in that** said device (4) for identifying messages (MSG) is adapted to hold said current identification key (K'ᵢ, K'_{i,j}) in memory until a key modification binary indicator supplementing said key identifier (KeyID) signals a change of key,
said device (4) for identifying messages (MSG) being preferably capable of identifying the messages (MSG) securely protected by means of a security device (3) in accordance with any one of Claims 1 to 11.

14. Device (4) for identifying messages (MSG) received via a network, each of said messages (MSG) including a part enciphered (SGN) by means of a modifiable current enciphering key (Kᵢ, K_{i,j}), said messages (MSG) being service announcement messages and said identification device (4) comprising:
- a unit for control of identification (21) of said enciphered part (SGN), by means of a modifiable current identification key (K'ᵢ, K'_{i,j}),
- and a unit (23) for extracting from said message (MSG) a key identifier (KeyID), enabling the current identification key (K'ᵢ, K'_{i,j}) to be selected from a predetermined set (26, 86) of available identification keys (K'₁...K'ₙ; K'_{1,1}...K'_{n,ln}) corresponding to a predetermined set (16, 76) of available enciphering keys (K₁...Kₙ ; K_{1,1}...K_{n,ln}), in such a way that said current identification key (K'ᵢ, K'_{i,j}) corresponds to said current enciphering key (K_{i,} K_{i,j}),
said identification control unit (21) being a unit for control of authentication of the enciphered part (SGN) and said enciphered part being a current signature,
**characterized in that** said key identifier (KeyID) being specified only in the case of an actual change of key and being otherwise replaced by a default value, signaling that the current identification key (K'ᵢ, K'_{i,j}) previously used is still valid, said device (4) for identifying messages (MSG) is intended to replace said current identification key (K'ᵢ, K'_{i,j}) only when said key identifier (KeyID) has another value than the default value,
said device (4) for identifying messages (MSG) being preferably capable of identifying the messages (MSG) securely protected by means of a security device (3) in accordance with any one of Claims 1 to 11.

15. Receiver (2) of messages (MSG), **characterized in that** it comprises at least one identification device (4) in accordance with Claims 13 or 14, said receiver being preferably designed to receive said messages (MSG) originating from a sender (1) of messages in accordance with Claim 12.

16. Computer program product, **characterized in that** it comprises functionalities for implementing said units and means (11-13 ; 21, 23) of the security device (3) for protecting messages (MSG) in accordance with any one of Claims 1 to 11, or of the device (4) for identifying messages (MSG) in accordance with Claims 13 or 14.

17. Service announcement message (MSG) intended to be despatched over a network to at least one receiver (2), said message including:
- at least one part enciphered (SGN) by means of respectively at least one modifiable current enciphering key (Kᵢ, K_{i,j}),
- and at least one key identifier (KeyID), respectively enabling at least one current identification key (K'ᵢ, K'_{i,j}) to be selected from at least one predetermined set (26, 86) of available identification keys (K'₁... K'ₙ ; K'_{1,1}...K'_{n,ln}), said current identification key making it possible to identify said enciphered part (SGN) respectively,
said enciphered part (SGN) being a signature,
**characterized in that** said message includes also a key modification binary indicator supplementing said key identifier (KeyID), which makes it possible to signal a change of key, so that said current identification key (K'_{i,} K'_{i,j}) can be held in memory until said key modification indicator signals a change of key,
said message (MSG) being preferably obtained by means of a security device (3) for protecting messages in accordance with any one of Claims 1 to 11 and being preferably intended for a device (4) for identifying messages in accordance with Claim 13.

18. Security process for protecting messages (MSG) intended to be despatched over a network from a sender (1), to at least one receiver (2) comprising means for control of identification (21) by a modifiable current identification key (K'ᵢ, K'_{i,j}), said messages (MSG) being service announcement messages, said security process comprising:
- a step of enciphering at least a part of each of said messages (MSG) by means of a current enciphering key (K_{i,} K_{i,j}), consisting in producing a signature (SGN) of said part,
- and a step of registering in said message (MSG) a key identifier (KeyID), enabling the receiver (2) to select said current identification key (K'ᵢ, K'_{i,j}) from a predetermined set (26, 86) of available identification keys (K'₁...K'ₙ ; K'_{1,1}...K'_{n,ln}), said key identifier (KeyID) enabling said receiver (2) to modify the current identification key (K'_{i,} K'_{i,j}) in such a way that said current identification key (K'_{i,} K'_{i,j}) corresponds to the current enciphering key (K_{i,} K_{i,j}),
**characterized in that** said security process comprises a step of selecting said current enciphering key (K_{i,} K_{i,j}) from at least one predetermined set (16, 19, 76) of available enciphering keys (K₁...Kₙ , K_{1,1}...K_{n,ln}) associated with said sender (1) and corresponding to said predetermined set (26, 86) of available identification keys (K'₁... K' ₙ ; K'_{1,1} ... K'_{n,ln}), a change of key being authorized upon the despatching of any message, or of any message of a given type,
said security process for protecting messages (MSG) being preferably implemented by means of a security device (3) for protecting messages (MSG) in accordance with any one of Claims 1 to 11.

19. Process for identifying messages (MSG) received via a network, each of said messages (MSG) including a part enciphered (SGN) by means of a modifiable current enciphering key (K_{i,} K_{i,j}), said messages (MSG) being service announcement messages and said identification process comprising:
- a step of extracting from said message (MSG) a key identifier (KeyID), by means of which a current identification key (K'ᵢ, K'_{i,j}) is selected from a predetermined set (26, 86) of available identification keys (K'₁ ... K'ₙ ; K'_{1,1}...K'_{n,ln}), said current identification key (K'_{i,} K'_{i,j}) corresponding to said current enciphering key (Kᵢ, K_{i,j}),
- and a step of identifying said enciphered part (SGN) by means of said current identification key (K'_{i,} K'_{i,j}),
said enciphered part (SGN) being a signature,
**characterized in that** said process for identifying messages (MSG) includes holding said current identification key (K'ᵢ, K'_{i,j}) in memory until a key modification binary indicator supplementing said key identifier (KeyID) signals a change of key,
said process for identifying messages (MSG) being preferably implemented by means of a device (4) for identifying messages (MSG) in accordance with Claim 13.

20. Process for identifying messages (MSG) received via a network, each of said messages (MSG) including a part enciphered (SGN) by means of a modifiable current enciphering key (Kᵢ, K_{i,j}), said messages (MSG) being service announcement messages and said identification process comprising:
- a step of extracting from said message (MSG) a key identifier (KeyID), by means of which a current identification key (K'ᵢ, K'_{i,j}) is selected from a predetermined set (26, 86) of available identification keys (K'₁ ... K'ₙ ; K'_{1,1}...K'_{n,ln}), said current identification key (K'_{i,} K'_{i,j}) corresponding to said current enciphering key (Kᵢ, K_{i,j}),
- and a step of identifying said enciphered part (SGN) by means of said current identification key (K'ᵢ, K'_{i,j}),
said enciphered part (SGN) being a signature,
**characterized in that** said key identifier (KeyID) being specified only in the case of an actual change of key and being otherwise replaced by a default value, signaling that the current identification key (K'_{i,} K'_{i,j}) previously used is still valid, said process for identifying messages (MSG) comprises replacing said current identification key (K'_{i,} K_{i,j}) only when said key identifier (KeyID) has another value than the default value,
said process for identifying messages (MSG) being preferably implemented by means of a device (4) for identifying messages (MSG) in accordance with Claim 14.

## Patentansprüche

1. Sicherheitsgerät (3) für den Schutz von Nachrichten (MSG), die über ein Netz von einem Sender (1) zu wenigstens einem Empfänger (2) geliefert werden, mit Mitteln zur Steuerung der Identifikation (21) der Nachrichten (MSG) durch einen modifizierbaren laufenden Identifikationsschlüssel (K'ᵢ, K'_{i,j}), wobei die Nachrichten (MSG) einen Service anzeigende Nachrichten sind und das Sicherheitsgerät (3) Folgendes enthält:
- eine Einheit zur Steuerung der Verschlüsselung (11) wenigstens eines Teils jeder der Nachrichten (MSG) durch einen modifizierbaren, laufenden Chiffrierschlüssel (Kᵢ, K_{i,j}),
- Mittel zur Steuerung (11A, 11A') der Zufügung zu jeder der Nachrichten (MSG) einer Unterschrift (SGN), die aus einem Ergebnis der Chiffrierung dieses Teils der Nachrichten durch den laufenden Chiffrierschlüssel (Kᵢ, K_{i,j}),
- und eine Einheit (13) zur Registrierung in den Nachrichten (MSG) eines Schlüsselidentifizierers (KEYID), der es dem Empfänger (2) ermöglicht, den laufenden Identifikationsschlüssel (K'ᵢ, K_{i,j}) aus einem vorbestimmten Satz (26, 86) von verfügbaren Identifikationsschlüsseln (K'₁ ... K'ₙ; K'_{1,1}...K'_{n,ln}) auszuwählen, wobei der Schlüsselidentifizierer (KeyID) es ermöglicht, dass der Empfänger (2) den laufenden Identifikationsschlüssel (K'_{i,} K'_{i,j}) in einer derartigen Weise modifiziert, dass der laufende Identifikationsschlüssel (K'ᵢ, K'_{i,j}) dem laufenden Chiffrierschlüssel (Kᵢ, K_{i,j}) entspricht,
**dadurch gekennzeichnet, dass**
das Sicherheitsgerät (3) eine Einheit (12) enthält zur Änderung des laufenden Chiffrierschlüssels (Kᵢ, K_{i,j}), der bestimmt ist zur Auswahl des Schlüssels (Kᵢ, K_{i,j}) aus einem vorbestimmten Satz (16, 76) von verfügbaren Chiffrierschlüsseln (K₁...Kₙ; K_{1,1}...K_{n,ln}) für den Sender (1) und entsprechend dem vorbestimmten Satz (26, 86) von verfügbaren Identifikationsschlüsseln (K'₁...K'ₙ; K'_{1,1}...K'_{n, ln}), wobei die Änderungseinheit eine Änderung auf dem Schlüssel nach der Erfassung einer Nachricht oder einer anderen Nachricht eines bestimmten Typs autorisiert.

2. Sicherheitsgerät (3) nach Anspruch 1, **dadurch gekennzeichnet, dass** das Sicherheitsgerät (3) vorgesehen ist zur Ergänzung des Schlüsselidentifizierers (KeyID) mit einem binären Indikator für eine Schlüsseländerung und der laufende Identifikationsschlüssel (K'_{i,} K'_{i,j}) dafür vorgesehen ist, den Speicher auf Empfang zu halten, bis der Schlüsseländerungsindikator eine Änderung des Schlüssels anzeigt.

3. Sicherheitsgerät (3) nach Anspruch 1, **dadurch gekennzeichnet, dass** das Sicherheitsgerät (3) derart ist, dass der Schlüsselidentifizierer (KeyID) nur in dem Fall einer tatsächlichen Änderung des Schlüssels spezifiziert wird und anderenfalls ersetzt wird durch einen Standardwert, der anzeigt, dass der vorher benutzte laufende Identifikationsschlüssei (K'ᵢ, K'_{i,j}) noch gültig ist, wodurch der Empfänger (2) den laufenden Identifikationsschlüssel (K'ᵢ, K'_{i,j}) nur dann ersetzten kann, wenn dieser Schlüsselidentifizerer (KeyID) einen anderen Wert hat als der Standardwert.

4. Sicherheitsgerät (3) nach einem der vorangehenden Ansprüche, **dadurch gekennzeichnet, dass** der vorbestimmte Satz (26,86) von verfügbaren Identifikationsschlüssefn (K'₁ ... K'ₙ; K'_{1,1} ... K_{n,ln}) ein Satz von Entchiffrierschlüsseln ist.

5. Sicherheitsgerät (3) nach einem der vorangehenden Ansprüche, **dadurch gekennzeichnet, dass** die Nachricht aus der vollständigen Nachricht besteht, abzüglich der Unterschrift, die der Schlüsselidentifizierer (KeyID[SGN]) enthält.

6. Sicherheitsgerät (3) nach einem der vorangehenden Ansprüche, **dadurch gekennzeichnet, dass** die Nachrichten (MSG) wenigstens aus ATVEF Ankündigungsnachrichten und System-Ankündigungsnachrichten gewählt sind.

7. Sicherheitsgerät (3) nach einem der vorangehenden Ansprüche **dadurch gekennzeichnet, dass** diese Nachrichten ein Authentifikationsfeld (AUTH) mitvariabler Länge (L-AUTH) enthalten und die Registriereinheit (13) den Schlüsselidentifizierer (KeyID) in dem Authentifikationsfeld (AUTH) registriert.

8. Sicherheitsgerät (3) nach einem der vorangehenden Ansprüche, **dadurch gekennzeichnet, dass** die Nachrichten (MSG) wenigstens aus MHP-Signalisierungsnachrichten ausgewählt werden.

9. Sicherheitsgerät (3) nach einem der vorangehenden Ansprüche, **dadurch gekennzeichnet, dass** die Schlüsselidentifizierer (KeyID) zu einem der verfügbaren Chiffrierungsschlüsseln (K₁...Kₙ) und zu einem vorbestimmten Schlüssel der verfügbaren Identifikationsschlüssel (K'₁...K'ₙ) gehören, die den Chiffrierschlüsseln entsprechen.

10. Sicherheitsgerät (3) nach einem der Ansprüche 1- 8, **dadurch gekennzeichnet, dass** jeder der Schlüsselidentifizierer (KeyID) zu einem bestimmten Block (Bᵢ) von Chiffrierschlüsseln (K'_{i,j}) aus dem Satz (16, 76) der verfügbaren Chiffrierschlüssel (K'_{1,1}...K_{n,ln}) und zu einem vorbestimmten Block (B'ᵢ) von Identifikationsschlüsseln (K'_{i,j}) gehören, die jeweils den Chiffrierschlüsseln (K_{i,j}) gehören, aus dem Satz (26, 86) der verfügbaren Identifikationsschlüssel (K'_{1,1}...K'_{n,ln}) entsprechen.

11. Sicherheitsgerät (3) nach einem der vorangehenden Ansprüche, **dadurch gekennzeichnet, dass** die Registriereinheit (13) bestimmt ist zur Wahl des Schlüsselidentifizierers (KeyID) aus einer Zahl von Werten, die zwischen 8 und 12 liegen, und vorzugsweise gleich 10.

12. Sender (1) von Nachrichten (MSG), **dadurch gekennzeichnet, dass** er wenigstens ein Sicherheitsgerät (3) nach einem der Ansprüche 1 bis 11 enthält und der Sender vorzugsweise zur Sendung der Nachrichten (MSG) durch allgemeine Sendung vorgesehen ist.

13. Gerät (4) zur Identifizierung von über ein Netz empfangenen Nachrichten (MSG), wobei jede der Nachrichten (MSG) einen Teil enthält, der durch einen modifizierbaren laufenden Chiffrierschlüssels (Kᵢ, K_{i,j}) chiffriert wird, und die Nachrichten (MSG) Service-Mittelungsnachrichten sind und das Identifikationsgerät (4) Folgendes enthält:
- eine Einheit für die Steuerung der Identifikation (21) des chiffrierten Teils (SGN) durch einen modifizierbaren laufenden Identifikationsschlüssels (K'ᵢ, K'_{i,j}),
- und eine Einheit (23) zur Extrahierung aus der Nachricht (MSG) eines Schlüsselidentifizierers (KeyID), der die den laufenden Identifikationsschlüssel (K'ᵢ, K'_{i,j}) befähigt, aus einem vorbestimmten Satz (26, 86) von verfügbaren Identifikationsschlüssein (K'₁...K'ₙ; K'_{1,1}...K'_{n,ln}) ausgewählt wird, die einen vorbestimmten Satz (16, 76) von verfügbaren Chiffrierschlüsseln (K₁...Kₙ; K_{1,1}...K_{n,ln}) entsprechen, derart, dass der laufende Identifikationsschlüssel (K'_{i,} K'_{i,j}) dem laufenden Chiffrierschlüssel (K_{i,} K_{i,j}) entspricht,
wobei die Identifikations-Steuereinheit (21) eine Einheit ist für die Steuerung der Authentifikation des chiffrierten Teils (SGN) und der chiffrierte Teil eine laufende Unterschrift ist,
**dadurch gekennzeichnet, dass** das Gerät (4) zur Identifizierung der Nachrichten (MSG) vorgesehen ist zur Erhaltung des laufenden Identifikationsschlüssels (K'_{i,} K'_{i,} ⱼ) in dem Speicher, bis ein Schlüssel-Modifikations-Binärindikator den Schlüsselidentifizierer (KeyID) Signale auf eine Änderung des Schlüssels ergänzt,
das Gerät (4) zur Identifizierung der Nachrichten (MSG) ist vorzugsweise in der Lage zur Identifizierung der Nachrichten (MSG), die sicher geschützt sind durch ein Sicherheitsgerät (3) gemäß einem der Ansprüche 1 bis 11.

14. Gerät (4) zur Identifizierung von über ein Netz empfangene Identifizier-Nachrichten (MSG), wobei jede der Nachrichten (MSG) einen Teil enthält, der chiffriert ist (SGN) durch einen modifizierbaren laufenden Chiffrierungsschhüssel (K_{i,} K_{i,j}) und die Nachrichten (MSG) Service-Ankündigungsnachrichten sind und das Identifikationsgerät (4) Folgendes enthält:
- eine Einheit zur Steuerung der Identifikation (21) des chiffrierten Teils (SGN) durch einen modifizierbaren laufenden Identifikationsschlüssel (K'_{i,} K'_{i,j}),
- und eine Einheit (23) zur Extrahierung aus der Nachricht (MSG) eines Schlüsselidentifizierers (KeyID) der es ermöglicht, dass der laufende Identifikationsschlüssel (K'_{i,} K'_{i,j}) aus einem vorbestimmten Satz (26,86) von verfügbaren Identifikationsschlüsseln (K'₁...K'ₙ; K'_{1,1}...K'_{n,ln}) ausgewählt wird, die einem vorbestimmten Satz (16,76) von verfügbaren Chiffrierschlüsseln (K₁...Kₙ; K_{1,1} ... K_{n,ln}) entsprechen, derart, dass der laufende Identifikationsschlüssel (K'_{i,} K'_{i,j}) dem laufenden Chiffrierschlüssel (K_{i,} K_{i,j}) entspricht,
- wobei die Identifikationssteuereinheit (21) eine Einheit ist zur Steuerung der Authentifikation des chiffrierten Teils (SGN) und des chiffrierten Teils, der eine laufende Unterschrift ist,
**dadurch gekennzeichnet, dass** der Schlüsselidentifizierer (KeyID) nur in dem Fall einer tatsächlichen Änderung des Schlüssels spezifiziert wird und anderenfalls ersetzt wird durch einen Standardwert, der signalisiert, dass der vorher benutzte laufende Identifikationsschlüssel (K'ᵢ, K'_{i,j}) noch gültig ist, dass das Gerät (4) zur Identifizierung von Nachrichten (MSG) vorgesehen ist zum Ersatz des laufenden Identifikationsschlüssels (K'ᵢ, K'_{i,j}) nur dann, wenn der Schlüsselidentifizierer (KeyID) einen anderen Wert als den Standardwert hat,
wobei das Gerät (4) zur Identifizierung der Nachrichten (MSG) vorzugsweise in der Lage ist, die Nachrichten (MSG) zu identifizieren, die sicher geschützt sind durch ein Sicherheitsgerät (3) nach einem der Ansprüche 1 bis 11.

15. Empfänger (2) von Nachrichten (MSG),**dadurch gekennzeichnet, dass** er wenigstens ein Identifikationsgerät (4) nach den Ansprüchen 13 oder 14 enthält, dass der Empfänger vorzugsweise vorgesehen ist zum Empfang der Nachrichten (MSG) von einem Sender (1) von Nachrichten gemäß Anspruch 12.

16. Computerprogrammprodukt, **dadurch gekennzeichnet, dass** es Funktionalitäten zur Durchführung der Einheiten und Mittel (11-13; 21, 23) des Sicherheitsgeräts (3) enthält zum Schutz von Nachrichten (MSG) nach einem der Ansprüche 1 bis 11 oder des Geräts (4) zur Identifizierung von Nachrichten (MSG) nach den Ansprüchen 13 oder 14.

17. Service-Ankündigungsnachricht (MSG), vorgesehen für die Sendung über ein Netz zu wenigstens einem Empfänger (2) mit:
- wenigstens einem Teil der durch Mittel von jeweils wenigstens einem modifizierbaren laufenden Chiffrierschlüssel (Kᵢ, K_{i,j}) chiffriert ist (SGN),
- und wenigstens einem Schlüsselidentifizierer (KeylD), der jeweils ermöglicht, dass wenigstens ein laufender Identifikationsschlüssel (K'ᵢ, K'_{i,j}) aus wenigstens einem vorbestimmten Satz (26, 86) von verfügbaren Identifikationsschlüsseln (K'₁...K'ₙ; K'_{1,1} ... K'_{n,ln}) ausgewählt wird, wobei der laufende Identifikationsschlüssel es ermöglicht, den chiffrierten Teil (SGN) jeweils zu identifizieren,
- wobei der chiffrierte Teil (SGN) eine Unterschrift ist,
**dadurch gekennzeichnet, dass** die Nachricht außerdem einen Schlüssel-Modifikations-Binärindikator enthält, der den Schlüsselidentifizierer (KeyID) ergänzt, wodurch es ermöglicht wird, eine Änderung des Schlüssels zu signalisieren, so dass der laufende Identifikationsschlüssel (K'_{i,} K'_{i,j}) in dem Speicher gehalten werden kann, bis der Schlüssel Modifikationsindikator eine Änderung des Schlüssels anzeigt,
- wobei die Nachricht (MSG) vorzugsweise durch ein Sicherheitsgerät (3) zum Schutz von Nachrichten gemäß einem der Ansprüche 1 bis 11 gewonnen wird und vorzugsweise vorgesehen ist für ein Gerät (4) zur Identifizierung von Nachrichten gemäß Anspruch 13.

18. Sicherheitsvorgang zum Schutz von Nachrichten (MSG), die zur Übertragung über ein Netz von einem Sender (1) vorgesehen sind, zu wenigstens einem Empfänger (2) mit Mitteln für die Steuerung einer Identifikation (21) durch einen veränderbaren laufenden Identifikationsschlüssef (K'ᵢ, K'_{i,j}), wobei die Nachrichten (MSG) Service-Ankündigungsnachrichten sind, mit folgenden Merkmalen:
- einem Schritt zur Chiffrierung wenigstens eines Teils jeder der Nachrichten (MSG) durch einen laufenden Chiffrierschlüssel (Kᵢ, K_{i,j}), der in der Erzeugung einer Unterschrift (SGN) dieses Teils besteht,
- und einem Schritt zur Registrierung in der Nachricht (MSG) eines Schlüsselidentifizierers (KeyID), der ermöglicht, dass der Empfänger (2) den laufenden Identifikationsschlüssel (K'_{i,} K'_{i,j}) aus einem vorbestimmten Satz (26, 86) von verfügbaren Identifikationsschlüsseln (K'₁...K'ₙ; K'_{1,1}...K'_{n,ln}) auswählt und der Schlüsselidentifizierer (KeyID) ermöglicht, dass der Empfänger (2) den laufenden Identifikationsschlüssel (K'ᵢ, K'_{i,j}) derart modifiziert, dass der laufende Identifikationsschlüssel (K'ᵢ, K'_{i,j}) dem laufenden Chiffrierschlüssel (Kᵢ, K_{i,j}) entspricht,
**dadurch gekennzeichnet, dass** der Sicherheitsvorgang einen Schritt enthält für die Wahl des laufenden Chiffrierungsschlüssels (Kᵢ, K_{i,j}) aus wenigstens einem vorbestimmten Satz (16, 19, 76) von verfügbaren Chiffrierschlüsseln (K₁...Kₙ, K_{1,1}...K_{n,ln}) für den Sender (1) und entsprechend dem vorbestimmten Satz (26, 86) von verfügbaren Identifikationsschlüsseln (K'₁...K'ₙ; K'_{1,1}...K'_{n,ln}) eine Auswahl von Schlüsseln ist autorisiert einige Nachrichten abzuschicken oder eine Nachricht eines bestimmten Typs, und dass der Sicherheitsvorgang zum Schutz der Nachrichten (MSG) vorzugsweise durch ein Sicherheitsgerät (3) für den Schutz von Nachrichten (MSG) gemäß einem der Ansprüche 1 bis 11 durchgeführt wird.

19. Vorgang zur Identifizierung von über ein Netz empfangenen Nachrichten (MSG), wobei jede der Nachrichten (MSG) ein durch einen modifizierbaren laufenden Chiffrierschlüssel (Kᵢ, K_{i,j}) chiffrierten Teil enthält und die Nachrichten (MSG) Service-Ankündigungsnachrichten sind und der Identifiziervorgang Folgendes enthält:
- einen Schritt zur Extrahierung aus der Nachricht (MSG) eines Schlüsselidentfizierers (KeyID) durch Mittel, von denen ein laufender Identifikationsschlüssel (K'ᵢ, K'_{i,j}) aus einem vorbestimmten Satz (26, 86) von verfügbaren Identifikationsschlüsseln (K'₁...K'ₙ; K'_{1,1}...K'_{n,ln}) ausgewählt wird und der laufende Identifizierungsschlüssel (K'_{i,} K'_{i,j}) dem laufenden Chiffrierschlüssel (K_{i,} K_{i,j}) entspricht,
- und einen Schritt zur Identifizierung des chiffrierten Teils (SGN) durch den laufenden Identifikationsschlüssel (K'_{i,} K'_{i,j}),
- und der chiffrierte Teil (SGN) eine Unterschrift ist,
**dadurch gekennzeichnet, dass** der Vorgang zur Identifizierung der Nachrichten (MSG) die Haltung des laufenden ldentifizierungsschlüssels (K'ᵢ, K'_{i,j}) in dem Speicher enthält, bis ein Schlüssel-Modifikations-Binärindikator die Ergänzung des Schlüsselidentfizierers (KeyID) eine Änderung des Schlüssels signalisiert, der Vorgang zur Identifizierung der Nachrichten (MSG) vorzugsweise durchgeführt wird durch ein Gerät (4) zur Identifizierung von Nachrichten (MSG) gemäß Anspruch 13.

20. Vorgang zur Identifizierung von über ein Netz empfangenen Nachrichten (MSG), wobei jede der Nachrichten (MSG) einen Teil enthält, der chiffriert ist (SGN) durch einen modifizierbaren laufenden Chiffrierschlüssel (Kᵢ, K_{i,j}), und die Nachrichten (MSG) Service-Ankündigungsnachrichten sind und der Identifikationsvorgang Folgendes enthält:
- einen Schritt zum Extrahieren aus der Nachricht (MSG) eines Schlüsselidentifzierers (KeyID), durch den ein laufender Identifizierungsschlüssel (K'ᵢ, K'_{i,j}) aus einem vorbestimmten Satz (26,86) von verfügbaren Identifizierungsschlüsseln (K'₁ ... K'ₙ; K'_{1,1} ... K_{n,ln}) ausgewählt wird und der laufende Identifizierungsschlüssel (K'ᵢ, K'_{i,j}) dem laufenden Chiffrierschlüssel (Kᵢ, K_{i,j}) entspricht,
- und einen Schritt zur Identifizierung des chiffrierten Teils (SGN) durch den laufenden Identifizierungsschlüssel (K'ᵢ, K'_{i,j}), und
- der chiffrierte Teil (SGN) eine Unterschrift ist,
**dadurch gekennzeichnet, dass** der Schlüsselidentifizierer (KeyID) nur spezifiziert wird in dem Fall einer tatsächlichen Änderung eines Schlüssels und anderenfalls durch einen Standardwert ersetzt wird, der signalisiert, dass der vorher benutzte laufende Identifizierungsschlüssel (K'_{i,} K'_{i,j}) noch gültig ist, und der Vorgang zur Identifizierung von Nachrichten (MSG) den Ersatz des laufenden Identifikationsschlüssels (K'_{i,} K'_{i,j}) nur dann ersetzt, wenn der Schlüsselidentifizierer (KeyID) einen anderen Wert als den Standardwert hat,
dass der Vorgang zur Identifizierung der Nachrichten (MSG) vorzugsweise durch ein Gerät (4) durchgeführt wird zur Identifizierung der Nachrichten (MSG) gemäß Anspruch 14.

## Revendications

1. Dispositif de sécurité (3) pour la protection de messages (MSG) destinés à être envoyés sur un réseau par un émetteur (1) à au moins un récepteur (2) comportant un moyen de commande d'identification (21) de messages (MSG) par une clé d'identification en vigueur modifiable (K'ᵢ, K'ᵢⱼ), lesdits messages étant des messages d'annonce de service et ledit dispositif de sécurité (3) comportant :
- une unité de commande de chiffrement (11) d'au moins une partie de chacun desdits messages (MSG) au moyen d'une clé de chiffrement en vigueur modifiable (Kᵢ, Kᵢⱼ),
- un moyen de commande (11A, 11A') d'ajout à chacun desdits messages (MSG) d'une signature (SGN) constituée du résultat du chiffrement de ladite partie dudit message au moyen de ladite clé de chiffrement en vigueur (Kᵢ, Kᵢⱼ),
- et une unité (13) d'enregistrement dans ledit message (MSG) d'un identificateur de clé (KeyID) permettant au récepteur (2) de sélectionner la clé d'identification en vigueur (K'ᵢ, K'ᵢⱼ) dans un ensemble prédéterminé (26, 86) de clés d'identification disponibles (K'₁ ... K'ₙ ; K'_{1,1} ... K'_{n,ln}), ledit identificateur de clé (KeyID) permettant audit récepteur (2) de modifier la clé d'identification en vigueur (K'ᵢ, K'_{i,j}) de telle façon que ladite clé d'identification (K'ᵢ, K'_{i,j}) corresponde à la clé de chiffrement en vigueur (Kᵢ, Kᵢⱼ),
**caractérisé en ce que** ledit dispositif de sécurité (3) comporte une unité de modification (12) de la dite clé de chiffrement en vigueur (Kᵢ, K_{i,j}), conçue pour sélectionner ladite clé (Kᵢ, K_{i,j}) dans un ensemble prédéterminé (16, 76) de clés de chiffrement disponibles (K₁ ...Kₙ ; K_{1,1} ... K_{n,ln}) associées audit émetteur (1) et correspondant audit ensemble prédéterminé (26, 86) de clés d'identification disponibles (K'₁ ...K'ₙ ; K'_{1,1} ... K'_{n,ln}), ladite unité de modification autorisant une modification de clé au moment de l'envoi de n'importe quel message ou de n'importe quel message d'un type donné.

2. Dispositif de sécurité (3) selon la revendication 1, **caractérisé en ce que** ledit dispositif de sécurité (3) est conçu pour que soit ajouté audit identificateur de clé (KeyID) un indicateur binaire de modification de clé, la clé d'identification en vigueur (K'ᵢ, K'_{i,j}) étant destinée à être conservée en mémoire à la réception jusqu'à ce que ledit indicateur de modification de clé signale une modification de clé.

3. Dispositif de sécurité (3) selon la revendication 1, **caractérisé en ce que** ledit dispositif de sécurité (3) est tel que ledit identificateur de clé (KeyID) n'est spécifié que dans le cas d'une modification effective de clé et, sinon, est remplacé par une valeur par défaut, signalant que la clé d'identification en vigueur (K'ᵢ, K'_{i,j}) précédemment utilisée est encore valide, ce qui permet au récepteur (2) de ne remplacer ladite clé d'identification en vigueur (K'ᵢ, K'_{i,j}) que lorsque ledit identificateur de clé (KeyID) a une autre valeur que la valeur par défaut.

4. Système de sécurité (3) selon l'une quelconque des revendications précédentes, **caractérisé en ce que** l'ensemble prédéterminé (26, 86) de clés d'identification disponibles (K'₁, ... K'ₙ ; K'_{1,1} ...K'_{n,ln}) est un ensemble de clés de déchiffrement.

5. Système de sécurité (3) selon l'une quelconque des revendications précédentes, **caractérisé en ce que** ladite partie dudit message est constituée dudit message en entier dont été retirée la signature et qui comprend l'identificateur de clé (KeyID[SGN]).

6. Système de sécurité (3) selon l'une quelconque des revendications précédentes, **caractérisé en ce que** lesdits messages (MSG) sont choisis au moins parmi les messages d'annonce ATVEF et les messages d'annonce du système.

7. Système de sécurité (3) selon l'une quelconque des revendications précédentes, **caractérisé en ce que**, chacun desdits messages comportant un champ d'authentification (AUTH) de longueur variable (L-AUTH), l'unité d'enregistrement (13) est conçue pour enregistrer l'identificateur de clé (KeyID) dans ledit champ d'authentification (AUTH).

8. Système de sécurité (3) selon l'une quelconque des revendications précédentes, **caractérisé en ce que** lesdits messages (MSG) sont choisis au moins parmi les messages de signalisation MHP.

9. Système de sécurité (3) selon l'une quelconque des revendications précédentes, **caractérisé en ce que** chacun desdits identificateurs de clé (KeyID) est associé à une clé déterminée parmi les clés de chiffrement disponibles (K₁...Kₙ) et à une clé prédéterminée parmi les clés d'identification disponibles (K'₁...K'ₙ) correspondant à ladite clé de chiffrement.

10. Système de sécurité (3) selon l'une quelconque des revendications 1 à 8, **caractérisé en ce que** chacun desdits identificateurs de clé (KeyID) est associé à un bloc déterminé (Bᵢ) de clés de chiffrement (Kᵢⱼ) appartenant à l'ensemble (16, 76) de clés de chiffrement disponibles (K_{1,1}...K_{n,ln}) et à un bloc déterminé (B'ᵢ) de clé d'identification ((K'ᵢⱼ) correspondant respectivement aux dites clés de chiffrement (K'ᵢⱼ) et appartenant à l'ensemble (26, 86) des clés d'identification disponibles (K'_{1,1} ... K'_{n,ln}).

11. Système de sécurité (3) selon l'une quelconque des revendications précédentes, **caractérisé en ce que** l'unité d'enregistrement (13) est conçue pour sélectionner l'identificateur de clé (KeyID) parmi un certain nombre de valeurs comprises entre 8 et 12, et de préférence égal à 10.

12. Émetteur (1) de messages (MSG), **caractérisé en ce qu'**il comporte au moins un dispositif de sécurité (3) selon une quelconque des revendications 1 à 11, ledit émetteur étant configuré de préférence pour envoyer les messages (MSG) par diffusion générale.

13. Dispositif (4) d'identification de messages (MSG) reçus par l'intermédiaire d'un réseau, chacun desdits messages (MSG) comprenant une partie chiffrée (SGN) au moyen d'une clé de chiffrement modifiable en vigueur (Kᵢ, Kᵢⱼ), lesdits messages (MSG) étant des messages d'annonce de service et ledit dispositif d'identification (4) comportant :
- une unité (21) de contrôle d'identification de ladite partie chiffrée (SGN) au moyen d'une clé d'identification modifiable en vigueur (K'ᵢ, K'ᵢⱼ),
- et une unité (23) d'extraction dudit message (MSG) d'un identificateur de clé (KeyID), permettant à la clé d'identification modifiable en vigueur (K'ᵢ, K'ᵢⱼ) d'être sélectionnée dans un ensemble prédéterminé (26, 86) de clés d'identification disponibles (K'₁ ... K'ₙ ; K'_{1,1} ... K'_{n,ln}) correspondant à un ensemble prédéterminé (16, 76) de clés de chiffrement (K₁ ... Kₙ ; K_{1,1} ... K_{n,ln}) de façon à ce que ladite clé d'identification en vigueur (K'ᵢ, K'ᵢⱼ) corresponde à ladite clé de chiffrement en vigueur (Kᵢ, Kᵢⱼ),
ladite unité (21) de contrôle d'identification étant une unité de contrôle d'authenticité de la partie chiffrée (SGN) et ladite partie chiffrée étant une signature en vigueur,
**caractérisé en ce que** ledit dispositif (4) d'identification de messages (MSG) est conçu pour garder en mémoire ladite clé d'identification en vigueur (K'ᵢ, K'ᵢⱼ) jusqu'à ce qu'un indicateur binaire de modification de clé rajouté audit identificateur de clé (KeyID) signale une modification de clé,
ledit dispositif (4) d'identification de messages (MSG) étant de préférence capable d'identifier les messages (MSG) protégés de façon sûre au moyen d'un dispositif de sécurité (3) conforme à l'une quelconque des revendications 1 à 11.

14. Dispositif (4) d'identification de messages (MSG) reçus par l'intermédiaire d'un réseau, chacun desdits messages (MSG) comprenant une partie chiffrée (SGN) au moyen d'une clé de chiffrement modifiable en vigueur (Kᵢ, Kᵢⱼ), lesdits messages (MSG) étant des messages d'annonce de services et ledit dispositif d'identification (4) comportant :
- une unité (21) de contrôle d'identification de ladite partie chiffrée (SGN) au moyen d'une clé d'identification modifiable en vigueur (K'ᵢ, K'ᵢⱼ),
- et une unité (23) d'extraction dudit message (MSG) d'un identificateur de été (KeyID), permettant à la clé d'identification modifiable en vigueur (K'ᵢ, K'ᵢⱼ) d'être sélectionnée dans un ensemble prédéterminé (26, 86) de clés d'identification disponibles (K'₁ ... K'ₙ ; K'_{1,1} ... K'_{n,ln}) correspondant à un ensemble prédéterminé (16, 76) de clés de chiffrement (K₁ ...Kₙ ; K_{1,1} ...K_{n,ln}) de façon à ce que ladite clé d'identification en vigueur (K'ᵢ, K'ᵢⱼ) corresponde à ladite clé de chiffrement en vigueur (Kᵢ, Kᵢⱼ),
ladite unité (21) de contrôle d'identification étant une unité de contrôle d'authenticité de la partie chiffrée (SGN) et ladite partie chiffrée étant une signature en vigueur,
**caractérisé en ce que** ledit identificateur de clé (KeyID) n'est spécifié que dans le cas d'une modification effective de clé et, sinon, est remplacé par une valeur par défaut, signalant que la clé d'indentification en vigueur (K'ᵢ, K'_{i,j}) précédemment utilisée est encore valide, ledit dispositif (4) d'identification de messages (MSG) est susceptible de ne remplacer ladite clé d'identification en vigueur (K'ᵢ, K'_{i,j}) que lorsque ledit identificateur de clé (KeyID) a une autre valeur que la valeur par défaut,
ledit dispositif (4) d'identification de messages (MSG) étant de préférence capable d'identifier les messages (MSG) protégés de façon sûre au moyen d'un dispositif de sécurité (3) conforme à l'une quelconque des revendications 1 à 11.

15. Récepteur (2) de messages (MSG) **caractérisé en ce qu'**il comporte au moins un dispositif d'identification (4) conforme aux revendications 13 ou 14, ledit récepteur étant de préférence conçu pour recevoir lesdits messages (MSG) provenant d'un émetteur (1) de messages conformes à la revendication 12.

16. Produit programme d'ordinateur **caractérisé en ce qu'**il comporte des fonctions pour mettre en oeuvre lesdits unités et moyens (11à 13 ; 21, 23) du dispositif de sécurité (3) pour protéger des messages (MSG) conformes aux revendications 1 à 11 ou le dispositif (4) d'identification de messages (MSG) conforme aux revendications 13 ou 14.

17. Message d'annonce de service (MSG) destiné à être expédié en diffusion générale sur un réseau à au moins un récepteur (2), ledit message comprenant :
- au moins une partie chiffrée (SGN) au moyen respectivement d'au moins une clé de chiffrement modifiable en vigueur (Kᵢ, Kᵢⱼ),
- et au moins un identificateur de clé (KeyID) permettant respectivement à au moins une clé d'identification en vigueur (K'ᵢ, K'_{i,j}) d'être sélectionnée dans au moins un ensemble prédéterminé (26, 86) de clés d'identification disponibles (K'₁ ...K'ₙ ; K'_{1,1} ...K'_{n,ln}), ladite clé d'identification en vigueur permettant d'identifier respectivement ladite partie chiffrée (SGN),
ladite partie chiffrée (SGN) étant une signature,
**caractérisé en ce que** ledit message comprend également un indicateur binaire de modification de clé qui se rajoute audit identificateur de clé (KeyID), ce qui permet de signaler une modification de clé de façon à ce que ladite clé d'identification en vigueur (K'ᵢ, K'_{i,j}) soit conservée en mémoire jusqu'à ce que ledit indicateur de modification de clé signale une modification de clé,
ledit message (MSG) étant, de préférence, obtenu au moyen d'un dispositif de sécurité (3) pour protéger les messages conforme à l'une quelconque des revendications 1 à 11 et étant, de préférence, destiné à un dispositif (4) d'identification de messages conforme à la revendication 13 .

18. Procédé de sécurité pour protéger des messages (MSG) destinés à être expédié sur un réseau à partir d'un émetteur (1) à au moins un récepteur (2) comportant un moyen de contrôle d'identification (21) par une clé d'identification modifiable en vigueur (K'ᵢ, K'_{i,j}), lesdits messages (MSG) étant des messages d'annonce de service, ledit procédé de sécurité comportant :
- une phase de chiffrement d'au moins une partie de chacun desdits messages (MSG) au moyen d'une clé de chiffrement en vigueur (Kᵢ, Kᵢⱼ) ayant pour but la génération d'une signature (SGN) de ladite partie,
- et une phase d'enregistrement dans ledit message (MSG) d'un identificateur de clé (KeyID) permettant au récepteur (2) de sélectionner ladite clé d'identification en vigueur (K'ᵢ, K'_{i,j}) dans un ensemble prédéterminé (26, 86) de clés d'identifications disponibles (K'₁ ...K'ₙ ; K'_{1,1} ... K'_{n,ln}), ledit identificateur de clé (KeyID) permettant audit récepteur (2) de modifier la clé d'identification en vigueur (K'ᵢ, K'_{i,j}) de telle façon que ladite clé d'identification en vigueur (K'ᵢ, K'_{i,j}) corresponde à la clé de chiffrement en vigueur (Kᵢ, K_{i,j}),
**caractérisé en ce que** ledit procédé de sécurité comporte une phase de sélection de ladite clé de chiffrement en vigueur (Kᵢ, K_{i,j}) dans au moins un ensemble prédéterminé (16, 19, 76) de clés de chiffrement disponibles (K₁ ... Kₙ ; K_{1,1} ... K_{n,ln}) associé audit émetteur (1) et correspondant audit ensemble prédéterminé (26, 86) de clés d'identifications disponibles (K'₁...K'ₙ ; K'_{1,1}...K'_{n,ln}), une modification de clé étant autorisée au moment de l'expédition de n'importe quel message ou de n'importe quel message d'un type donné,
ledit procédé de sécurité pour protéger des messages (MSG) étant de préférence mis en oeuvre au moyen d'un dispositif de sécurité (3) pour protéger des messages (MSG) conforme à l'une quelconque des revendications 1 à 11.

19. Procédé d'identification de messages (MSG) reçus par l'intermédiaire d'un réseau, chacun desdits messages (MSG) comportant une partie chiffrée (SGN) au moyen d'une clé de chiffrement modifiable en vigueur (Kᵢ, K_{i,j}), lesdits messages (MSG) étant des messages d'annonce de service et ledit procédé d'identification comportant :
- une phase d'extraction dudit message (MSG) d'un identificateur de clé (KeyID), au moyen duquel une clé d'identification en vigueur (K'ᵢ, K'ᵢⱼ) est sélectionnée dans un ensemble prédéterminé (26, 86) de clés d'identification disponibles (K'₁ ...K'ₙ ; K'_{1,1} ... K'_{n,ln}), ladite clé d'identification en vigueur (K'ᵢ, K'ᵢⱼ) correspondant à ladite clé de chiffrement en vigueur (Kᵢ, Kᵢⱼ),
- et une phase d'identification de ladite partie chiffrée (SGN) au moyen de ladite clé d'identification en vigueur (K'ᵢ, K'ᵢⱼ),
ladite partie chiffrée (SGN) étant une signature,
**caractérisé en ce que** ledit procédé d'identification de messages (MSG) comprend la conservation en mémoire de ladite clé d'identification en vigueur (K'ᵢ, K'ᵢⱼ) jusqu'à ce qu'un indicateur binaire de modification de clé rajouté audit identificateur de clé (KeyID) signale une modification de clé, ledit procédé d'identification de messages (MSG) étant de préférence mis en oeuvre au moyen d'un dispositif (4) d'identification de messages (MSG) conforme à la revendication 13.

20. Procédé d'identification de messages (MSG) reçus par l'intermédiaire d'un réseau, chacun desdits messages (MSG) comprenant une partie chiffrée (SGN) au moyen d'une clé de chiffrement modifiable en vigueur (Kᵢ, K_{i,j}), lesdits messages (MSG) étant des messages d'annonce de service et ledit procédé d'identification comportant :
- une phase d'extraction dudit message (MSG) d'un identificateur de clé (KeyID), au moyen duquel une clé d'identification en vigueur (K'ᵢ, K'ᵢⱼ) est sélectionnée dans un ensemble prédéterminé (26, 86) de clés d'identification disponibles (K'₁ ...K'ₙ ; K'_{1,1} ...K'_{n,ln}), ladite clé d'identification en vigueur (K'ᵢ, K'ᵢⱼ) correspondant à ladite clé de chiffrement en vigueur (Kᵢ, Kᵢⱼ),
- et une phase d'identification de ladite partie chiffrée (SGN) au moyen de ladite clé d'identification en vigueur (K'ᵢ, K'ᵢⱼ),
ladite partie chiffrée (SGN) étant une signature,
**caractérisé en ce que** ledit identificateur de clé (KeyID) n'étant spécifié que dans le cas d'une modification effective de clé et étant, sinon, remplacé par une valeur par défaut, signalant que la clé d'identification en vigueur (K'ᵢ, K'ᵢⱼ) précédemment utilisée est encore valide, ledit procédé d'identification de messages (MSG) comporte le remplacement de ladite clé d'identification en vigueur (K'ᵢ, K'ᵢⱼ) dans le seul cas où ledit identificateur de clé (KeyID) a une autre valeur que la valeur par défaut,
ledit procédé d'identification de messages (MSG) étant de préférence mis en oeuvre au moyen d'un dispositif (4) d'identification de messages (MSG) conforme à la revendication 14.
